(19) **Europäisches Patentamt / European Patent Office / Office européen des brevets**

(11) **EP 2 341 602 A1**

(12) # EUROPEAN PATENT APPLICATION

(43) Date of publication:
06.07.2011 Bulletin 2011/27

(51) Int Cl.:
*H02K 57/00* (2006.01)   *F03G 3/08* (2006.01)

(21) Application number: 09180963.2

(22) Date of filing: 30.12.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(71) Applicant: Lysyuk, Dmitryi
Kiev (UA)

(72) Inventor: Lysyuk, Dmitryi
Kiev (UA)

(74) Representative: Gulde Hengelhaupt Ziebig &
Schneider
Patentanwälte - Rechtsanwälte
Wallstrasse 58/59
10179 Berlin (DE)

(54) **Actuator based on the centrifugal force created by rotating magnetic objects**

(57) The present invention is directed to an actuator comprising a first electromagnetic stator (123), a first rotor (113) being rotatably arranged inside the first electromagnetic stator (123), a first and a second electromagnet (115, 116) being provided at a first and an opposing second end of the first rotor (113), respectively, and a first permanent magnet (120) coupled to the first rotor (123) such that the first permanent magnet (120) is capable of moving along the first rotor (123). The actuator further comprises similarly a second electromagnetic stator (223), second rotor (213), third and fourth electromagnets (215, 216) and a second permanent magnet (220). The distribution of magnetic fields inside the electromagnetic stators (123, 223) and the rotor electromagnets is provided such that the first rotor (113) rotates clockwise and the second rotor (213) rotates anti-clockwise and the first and second permanent magnets (120, 220) move along the first and second rotors (113, 213), respectively.

Fig. 3

EP 2 341 602 A1

## Description

The current invention is directed to an actuator producing a residual force in a system of rotating magnetic objects. More specifically, it is directed to a means for moving objects in three-dimensional space.

An actuator typically is a mechanical device that consumes energy, usually created by air, electricity, or liquid, and converts that into some kind of motion. In engineering actuators are frequently used as mechanisms to introduce motion. Specific examples include electrical motors, pneumatic actuators, hydraulic actuators and the like.

One special kind of actuator is a helicopter, an aircraft that is lifted by horizontal rotors, each rotor consisting of two or more rotor blades. Helicopters can take off without any linear motion. The lift of the rotor also allows the helicopter to hover above a fixed point. They can be used to move objects in three-dimensional space, i.e. to lift and carry weights or freight or cargo. On a helicopter, a rotor may be mounted horizontally as a main rotor, providing a vertical lift, or it may be mounted vertically, such as a tail rotor, to provide a horizontal lift as thrust to counteract a torque effect. The rotating blades of the rotor generate a dynamic uplift by a flow of air.

Further known are mechanical vibrators, where the vibration is generated by an electric motor with an unbalanced mass on its driveshaft. Vibrators are used in many different industrial applications, e.g. in mobile telephones of for compacting different materials. The vibrations may be generated by rotating unbalanced masses, which may generate a sinusoidal resulting force or vibration.

## Summary of the Invention

It is an object of the invention to provide an actuator or means for moving an object in three-dimensional space.

Accordingly, the present invention provides an actuator comprising a first electromagnetic stator, a first rotor being rotatably arranged inside the first electromagnetic stator, a first and a second electromagnet being provided at a first and an opposing second end of the first rotor, respectively, and a first permanent magnet coupled to the first rotor such that the first permanent magnet is capable of moving along the first rotor. The actuator further comprises similarly a second electromagnetic stator, second rotor, third and fourth electromagnets and a second permanent magnet. The distribution of magnetic fields inside the electromagnetic stators and the rotor electromagnets is provided such that the first rotor rotates clockwise and the second rotor rotates anti-clockwise and the first and second permanent magnets move along the first and second rotors, respectively.

The actuator of the present invention allows generating a resulting force, which moves the actuator in a direction.

The first to fourth electromagnets of the rotors are provided with variable magnetic fields such that their magnetic forces oppose the projection of the magnetic forces of the first and second permanent magnets onto the main axis of the respective rotor and the projection of the magnetic forces of the stator onto the main axis of the respective rotor. The magnetic field generated by the first stator may rotate in a different direction than the magnetic field of the second stator, preferably the magnetic field of the first stator rotates clockwise and the magnetic field generated by the second stator rotates anti-clockwise. The magnetic field of the first permanent magnet is preferably arranged in parallel to a main axis of the first rotor, and wherein the magnetic field of the second permanent magnet is preferably arranged in parallel to a main axis of the second rotor.

By using the above arrangement, the net resulting force always points in the same direction.

Half of the circumference of each of the first and second electromagnetic stators preferably comprises variable magnetizable elements, the other half being non-variable such that the magnetic field generated by each of the first and second electromagnetic stators is preferably not-aligned with the magnetic-field of the first and to fourth electromagnets, respectively.

Due to the offset of the field, a force is generated which initiates the movement of the rotors.

The first rotor and the second rotor rotate preferably in the same plane. The first and second rotors even more preferably rotate with the same frequency.

Due to this alignment, the summation of the forces can be maximized. By changing the respective angles of rotation of the rotors and/or the frequencies, the size of the net force can be varied.

The center points of the first and second electromagnetic stators are preferably arranged spaced apart from each other on an axis perpendicular to the planes of rotation of the first and second rotors.

This arrangement further helps to maximize the resulting force.

The first and second electromagnetic stators are preferably formed as cylinders and the first and second rotors are preferably arranged along the diameter of the first and second electromagnetic stators, respectively, or are alternatively arranged with an angular offset with respect to the cross section of the first and second electromagnetic stators. The first and second rotors are preferably formed as hollow cylinders, the first and second permanent magnets being arranged inside the hollow cylinders.

This allows to easily building the actuator, to minimize the dimension and the costs.

The first and second permanent magnets are preferably identical and also the first and second electromagnetic stators are preferably identical. In consequence, the forces of the first and second rotating system are the same. The phase of rotation the first rotor and the phase of rotation of the second rotor are preferably the same.

This arrangement further helps to maximize the resulting force.

In another embodiment the actuator further comprises a third rotor arranged inside the first electromagnetic stator having a fifth and sixth electromagnet formed at both ends of the third rotor, a third permanent magnet being coupled to the third rotor, and a fourth rotor arranged inside the second electromagnetic stator having a seventh and eighth electromagnet formed at both ends of the fourth rotor, a fourth permanent magnet being coupled to the third rotor.

Advantageously, additional rotors increase the size of the resulting force.

The third rotor and the first rotor are preferably provided perpendicular to each other and the fourth rotor and the second rotor are preferably provided perpendicular to each other. The third rotor is preferably arranged in a different plane than the first rotor and the fourth rotor is arranged in a different plane than the second rotor. Advantageously, this arrangement allows to easily increasing the forces.

Alternatively, the third rotor is arranged in the same plane as the first rotor and the fourth rotor is arranged in the same plane as the second rotor. This allows minimizing the size of the actuator.

The actuator preferably comprises a control unit to control the distribution of magnetic fields of the electromagnetic stators and the electromagnets attached to the rotors. The control unit allows to easily controlling the distribution of the magnetic fields and the rotation of the rotors.

**Brief description of the drawings**

The invention will be described by exemplary embodiments of the invention with reference to the following figures, which show:

Fig. 1:  a first object rotating around an axis X1;

Fig. 2a-2d:  a first object rotating around a first axis X1, a second object rotating around a second axis X2, the planes of rotation of the first and second object rotating around an axis Y; the rotations are shown at 0°, 90°, 180° and 270°;

Fig. 3:  a first embodiment of the invention of two coupled rotating magnetic objects;

Fig. 4:  a single rotating magnetic object in a rotor placed in a stator at an angle of 0° and the corresponding magnetization of the stator and rotor;

Fig. 5:  a single rotating magnetic object in a rotor placed in a stator at an angle of 30° and the corresponding magnetization of the stator and rotor;

Fig. 6:  a single rotating magnetic object in a rotor placed in a stator at an angle of 60° and the corresponding magnetization of the stator and rotor;

Fig. 7:  a single rotating magnetic object in a rotor placed in a stator at an angle of 90° and the corresponding magnetization of the stator and rotor;

Fig. 8:  a single rotating magnetic object in a rotor placed in a stator at an angle of 120° and the corresponding magnetization of the stator and rotor;

Fig. 9:  a single rotating magnetic object in a rotor placed in a stator at an angle of 150° and the corresponding magnetization of the stator and rotor;

Fig. 10:  a single rotating magnetic object in a rotor placed in a stator at an angle of 180° and the corresponding magnetization of the stator and rotor;

Fig. 11:  a single rotating magnetic object in a rotor placed in a stator at an angle of 210° and the corresponding magnetization of the stator and rotor;

Fig. 12:  a single rotating magnetic object in a rotor placed in a stator at an angle of 240° and the corresponding magnetization of the stator and rotor;

Fig. 13:     a single rotating magnetic object in a rotor placed in a stator at an angle of 270° and the corresponding magnetization of the stator and rotor;

Fig. 14:     a single rotating magnetic object in a rotor placed in a stator at an angle of 300° and the corresponding magnetization of the stator and rotor;

Fig. 15:     a single rotating magnetic object in a rotor placed in a stator at an angle of 330° and the corresponding magnetization of the stator and rotor;

Fig. 16:     a single rotating magnetic object in a rotor placed in a stator at an angle of 360° and the corresponding magnetization of the stator and rotor;

Fig. 17:     a schematic diagram showing two rotating magnetic objects at an angle of 0°(360°) at the respective magnetization of the rotor and stator elements (top) and a corresponding vector diagram of the forces (bottom);

Fig. 18:     a schematic diagram showing two rotating magnetic objects at an angle of 30° at the respective magnetization of the rotor and stator elements (top) and a corresponding vector diagram of the forces (bottom);

Fig. 19:     a schematic diagram showing two rotating magnetic objects at an angle of 60° at the respective magnetization of the rotor and stator elements (top) and a corresponding vector diagram of the forces (bottom);

Fig. 20:     a schematic diagram showing two rotating magnetic objects at an angle of 90° at the respective magnetization of the rotor and stator elements (top) and a corresponding vector diagram of the forces (bottom);

Fig. 21:     a schematic diagram showing two rotating magnetic objects at an angle of 120° at the respective magnetization of the rotor and stator elements (top) and a corresponding vector diagram of the forces (bottom);

Fig. 22:     a schematic diagram showing two rotating magnetic objects at an angle of 150° at the respective magnetization of the rotor and stator elements (top) and a corresponding vector diagram of the forces (bottom);

Fig. 23:     a schematic diagram showing two rotating magnetic objects at an angle of 180° at the respective magnetization of the rotor and stator elements (top) and a corresponding vector diagram of the forces (bottom);

Fig. 24:     a schematic diagram showing two rotating magnetic objects at an angle of 210° at the respective magnetization of the rotor and stator elements (top) and a corresponding vector diagram of the forces (bottom);

Fig. 25:     v a schematic diagram showing two rotating magnetic objects at an angle of 240° at the respective magnetization of the rotor and stator elements (top) and a corresponding vector diagram of the forces (bottom);

Fig. 26:     a schematic diagram showing two rotating magnetic objects at an angle of 270° at the respective magnetization of the rotor and stator elements (top) and a corresponding vector diagram of the forces (bottom);

Fig. 27:     a schematic diagram showing two rotating magnetic objects at an angle of 300° at the respective magnetization of the rotor and stator elements (top) and a corresponding vector diagram of the forces (bottom);

Fig. 28:     a schematic diagram showing two rotating magnetic objects at an angle of 330° at the respective magnetization of the rotor and stator elements (top) and a corresponding vector diagram of the forces (bottom):

Fig. 29:     a graph of the resulting force for the different angles between 0° and 360° of Figs. 17-28;

Fig. 30:     a second embodiment of the invention with two rotors placed on top of each other in a single stator;

Fig. 31:     a third embodiment of the invention with two rotors placed in the same plane in a single stator;

**Detailed description of the drawings**

The present invention is directed to a means or method of moving objects in three-dimensional space. The means may also be called actuator or cargo lifter without any limiting effect. The means produces a force which is based on the forces of inertia that appear in rotating bodies that rotate in a global coordinate system (coordinates X, Y, Z). The rotating bodies may be called objects or balances.

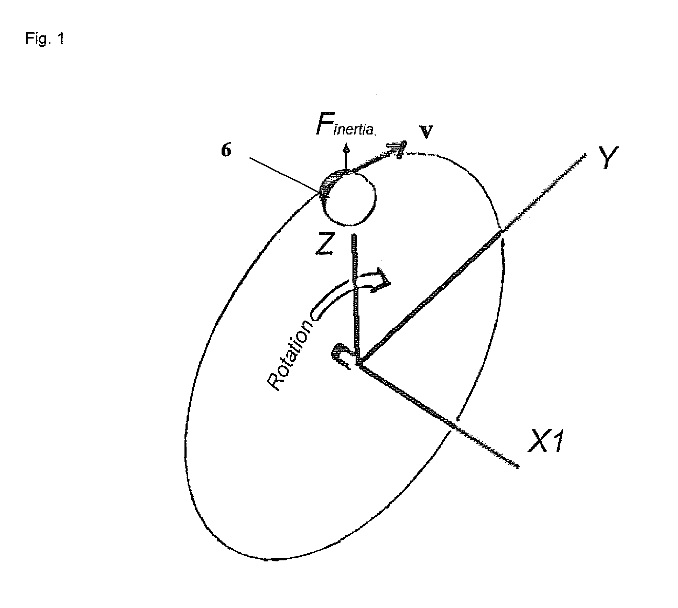

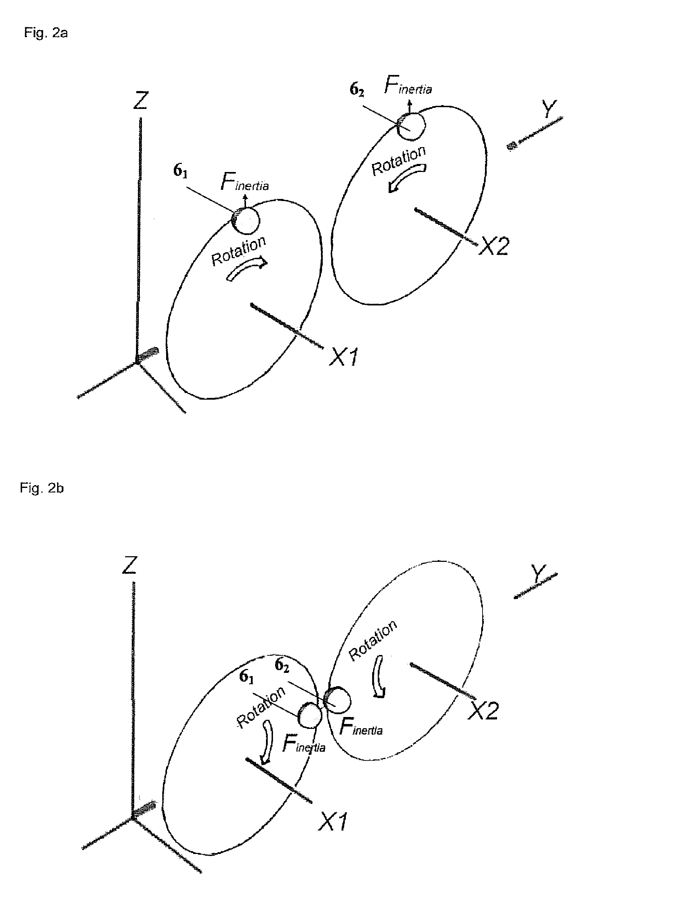

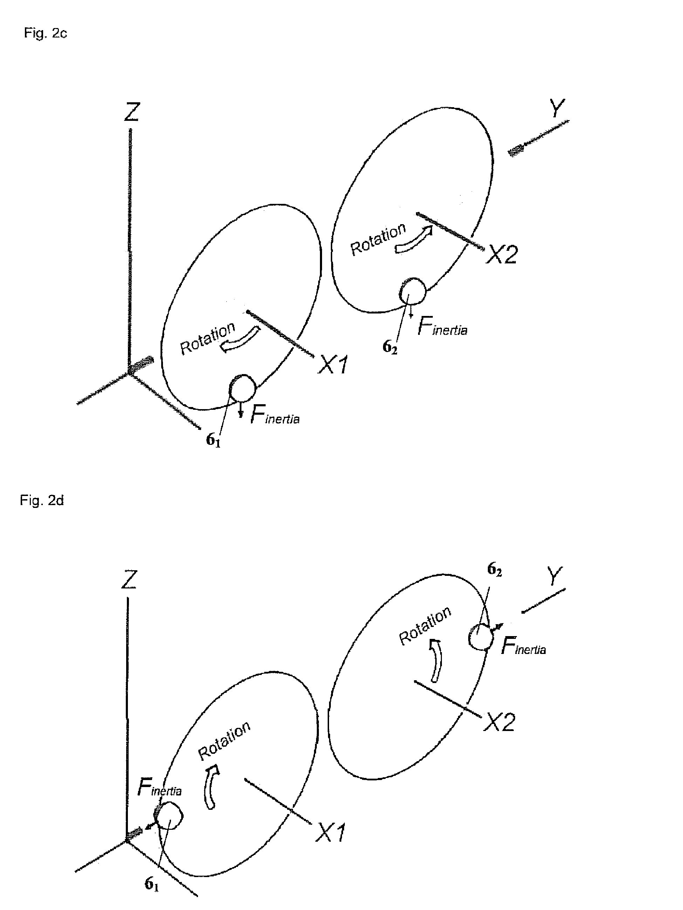

Fig. 1 and 2 are used to show the general principle of the present invention. Fig. 1 shows a rotating object 6. The object rotates around the axis X1. When an object rotates around the local axis X1, having a radius of rotation perpendicular to the axis, a force of inertia appears, and this force of inertia is directed from the center of rotation along the line of the radius of rotation and is applied to the center of mass of the object at any given moment of time. The force can be calculated from the equation:

$$F_{inertia} = m \cdot v^2 / r \qquad\qquad (1),$$

where "$F_{inertia}$" is the force of inertia, measured in newtons (N), "m" is the mass of the object, measured in kilograms (kg); "v" is the speed of the object perpendicular to the radius, measured in meters per second (m/s) and "r" is the radius of rotation, measured in meters (m). This equation may be rewritten as:

$$F_{inertia} = 4 \cdot \pi^2 \cdot m \cdot r \cdot f^2 \qquad\qquad (2),$$

where f is the frequency of rotation of the object.

The size of the force of inertia is linearly proportionate to the mass of the object 6 and to the radius of rotation, and quadratic proportionate to the frequency $f_1$ of rotation. At such conditions, at a constant frequency of rotation and constant mass and radius of rotation, the force of inertia has a constant value and its vector is directed along the radius of rotation at every moment of rotation, in direction away from the center of rotation represented by the local axis X1 in Fig. 1. The complete fixed combination of rotating object, radius, axis X1 and the frequency is called in the following a "single system".

Fig. 2a-2d now show two such single systems or two rotating objects $6_1$ and $6_2$ for different angles of 0 degrees, 90 degrees, 180 degrees and 270 degrees. In Fig. 2a-d, the two single systems are allocated in the same plane, i.e. the YZ-plane, so that their axis X1 and X2 are perpendicular to that plane and parallel to one another. The axis Y that connects the centers of rotation of the two rotating objects $6_1$ and $6_2$ lies in the YZ-plane. Now, if these two single systems $6_1$ and $6_2$ rotate in different directions, i.e. the singular system with object $6_1$ rotates clockwise and the singular system with object $6_2$ rotates anticlockwise, and the frequency of rotation $f_1$ and $f_2$ are equal for both singular systems, and the phases of the objects $6_1$ and $6_2$ are the same for both systems, e.g. both objects $6_1$ and $6_2$ start their movement at the top as shown in Fig. 2a, an effect of combining the two forces of inertia of the two moving objects $6_1$ and $6_2$ is achieved. The direction of the sum vector of the forces of inertia will lie in the same plane, the YZ-plane and will always be perpendicular to the axis Y1 as can be seen in Figs. 2a-2d.

The sum vector of the forces of inertia of such coupled single systems will achieve its positive maximums at the angle a=0° and 360° (Fig. 2a) (angle measured with respect to the rotation of the first object $6_1$ around axis X1 and axis X2 for object $6_2$. The negative maximum of the sum force of inertia is achieved at the angle $\alpha$=180° (Fig. 2c). The sum of the forces of inertia is zero at the angles of rotation equal $\alpha$=90° and $\alpha$=270° (Fig. 2b and 2d). The value of the sum of the forces of inertia depends on the angle of rotation at each specific moment in time, but due to the clockwise and anticlockwise motion of the first and second objects $6_1$ and $6_2$, the direction of the sum vector of the forces of inertia is always parallel to axis Z. The value of the resulting force follows a cosine curve, when the movements start with both objects $6_1$ and $6_2$ being located at the top position. The force has a positive value along the z-direction in the top-most position, is zero at 90°, negative at the bottom position of the two objects 61 and 62 and zero again at 270°.

In the present invention, a magnetic moment is used to drive an object, here a permanent magnet. The magnet field can operate the position of the object 6 in the single system or in a number of single systems, resulting in net force produced by summing force of inertia and the magnet field forces which is always positive or zero in its number and direction along the axis Z, remaining in the plane ZY, while rotating around an axis X. To operate a change of radius of the rotating object 6 by means of changing the position of the balance along its own axis, being perpendicular to axis X, magnet fields, used in natural or electric magnets $F_{magn}$, are employed.

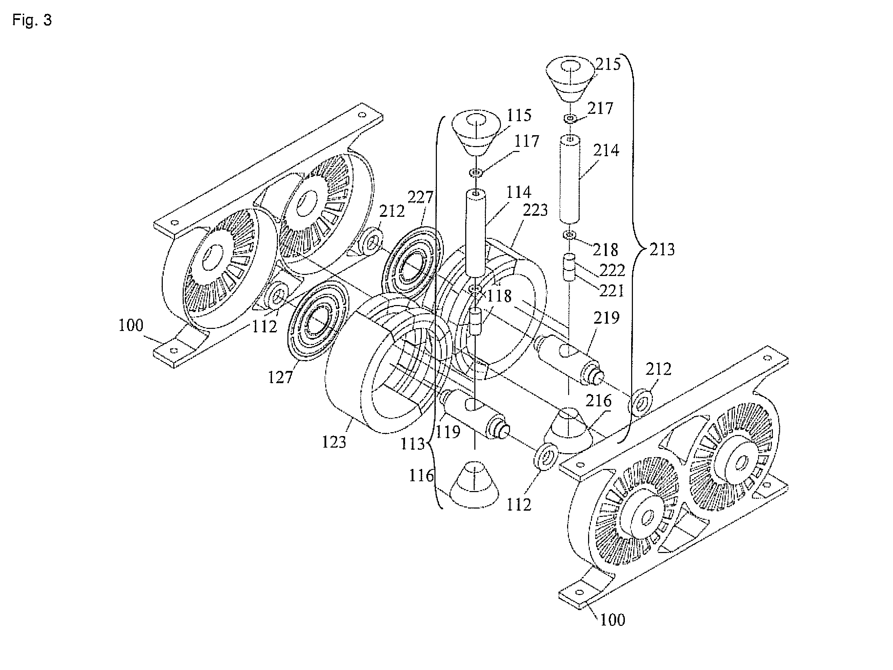

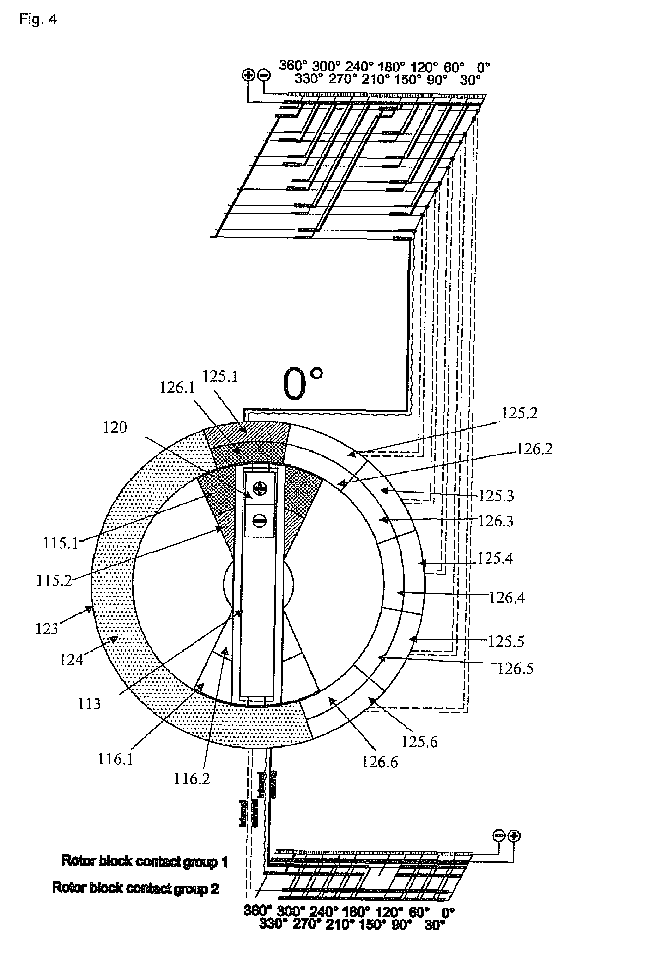

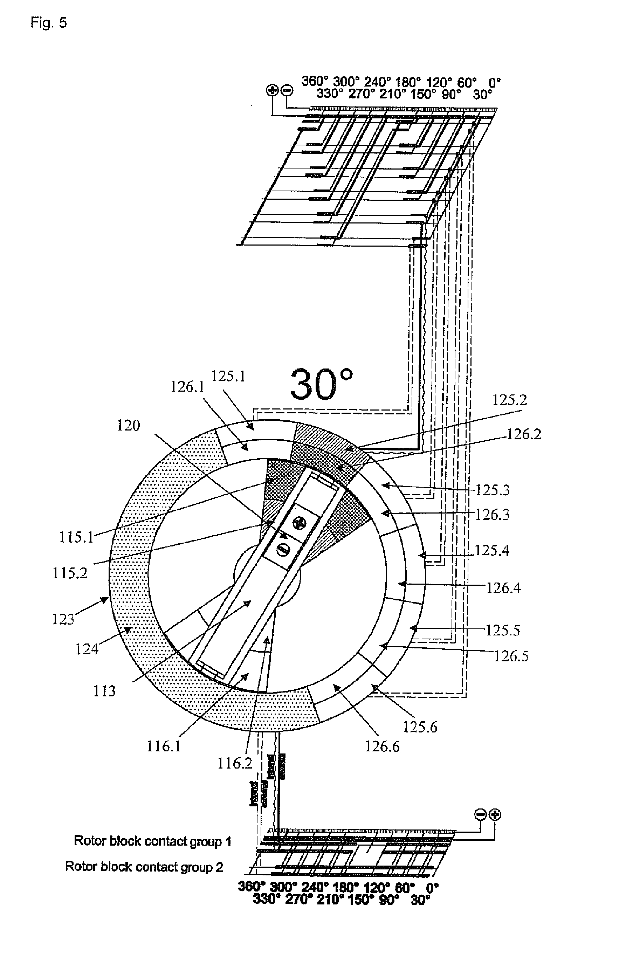

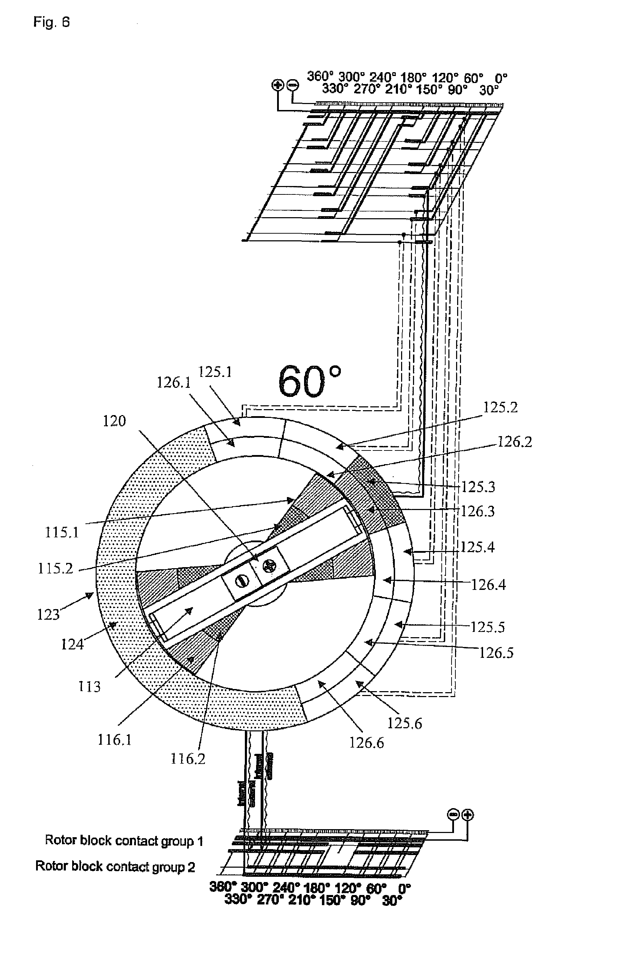

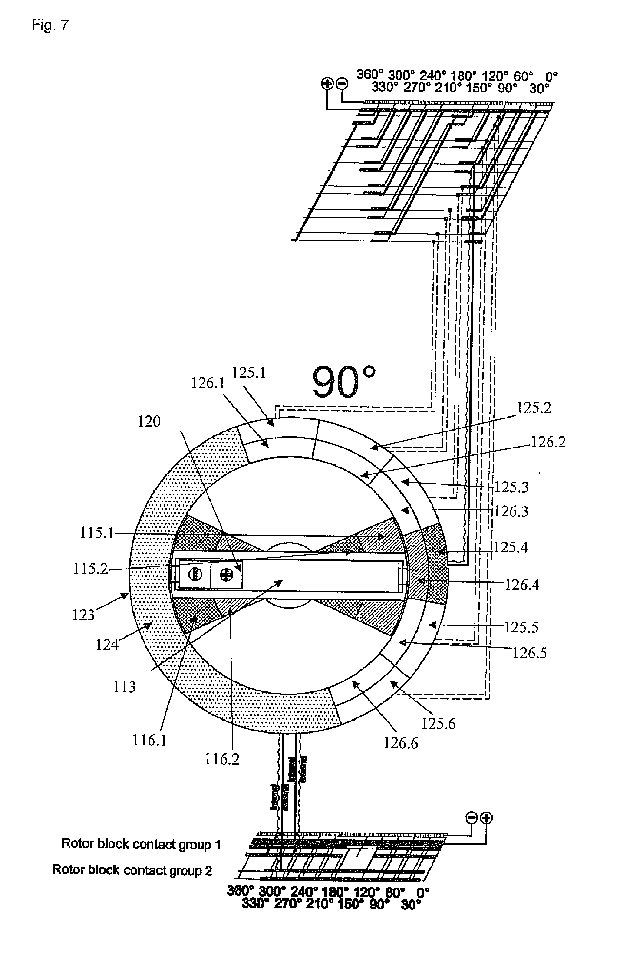

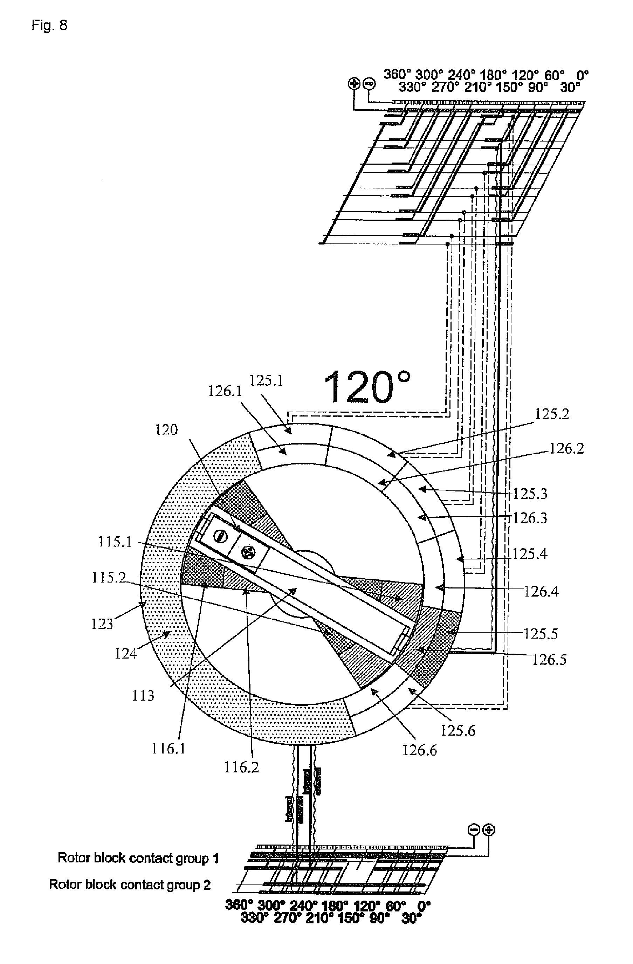

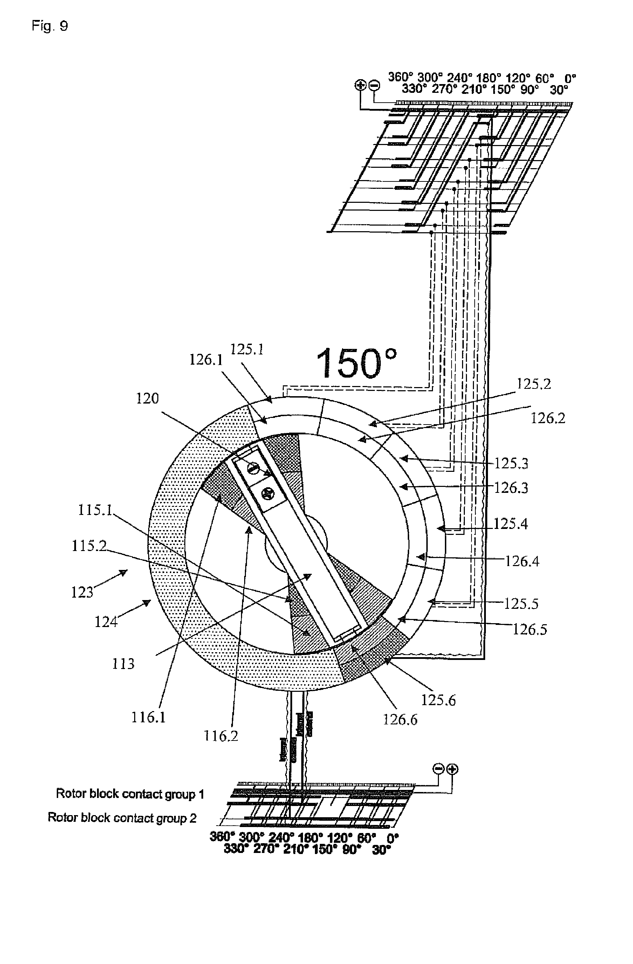

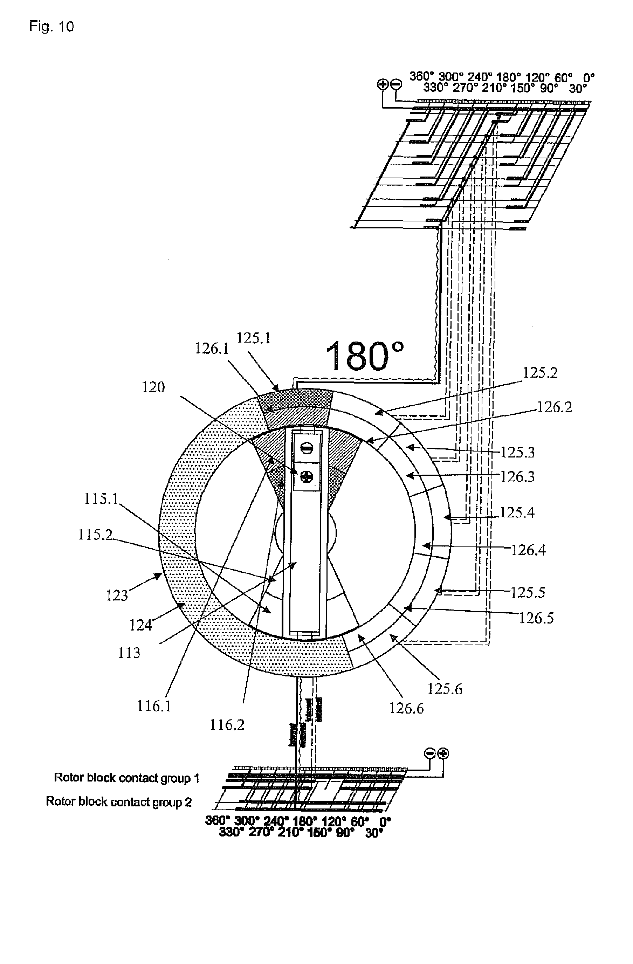

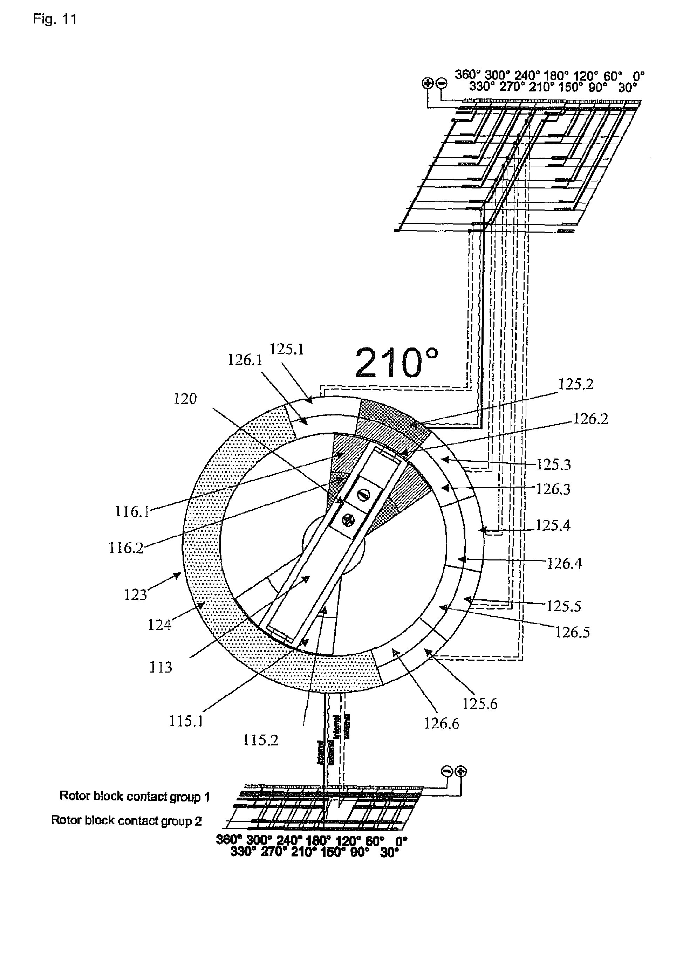

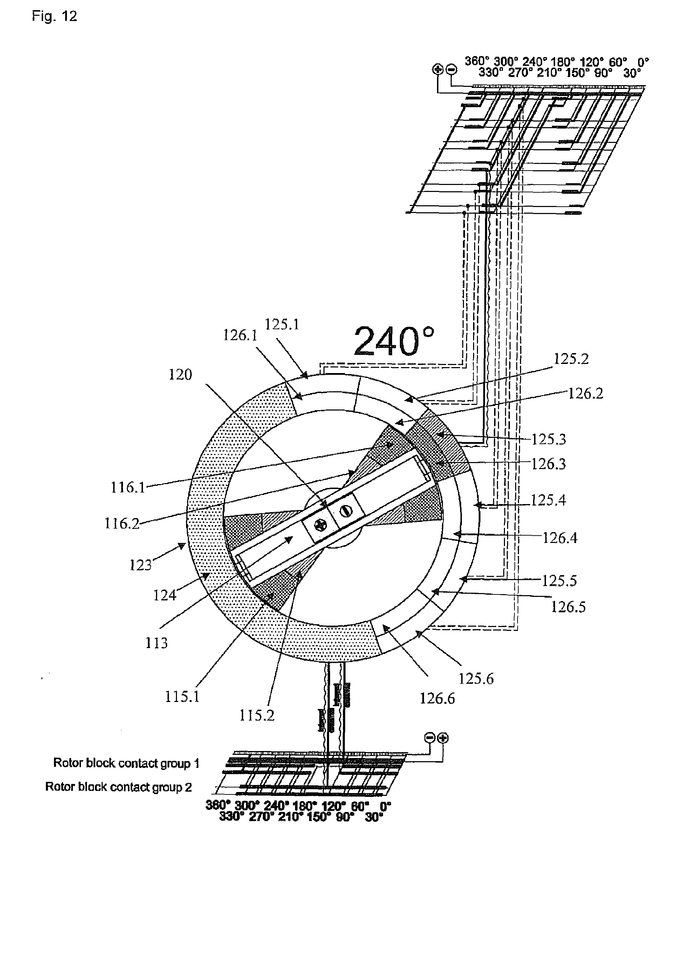

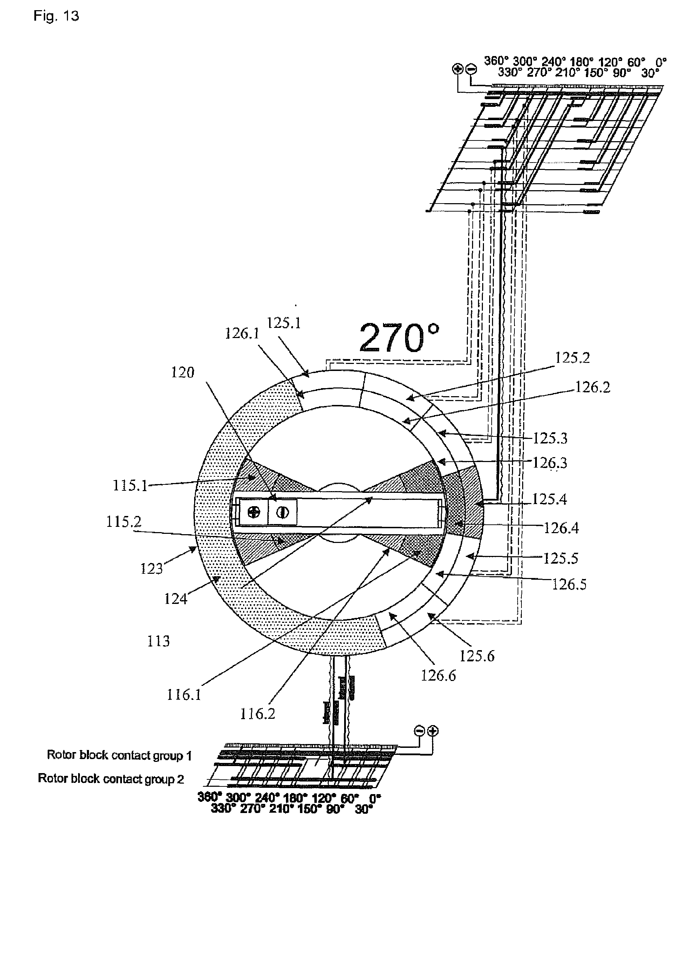

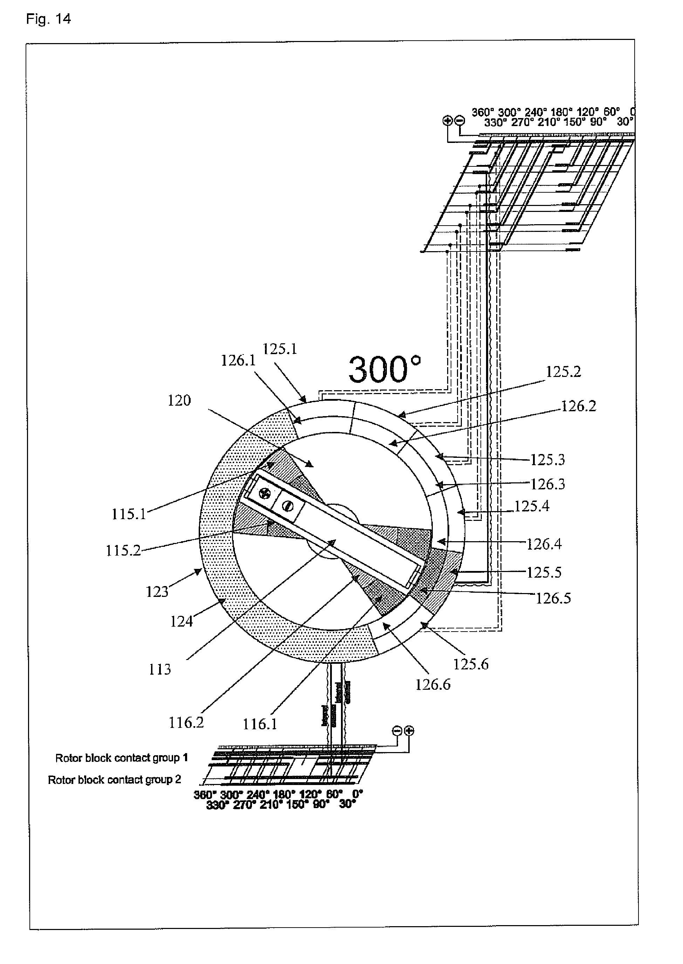

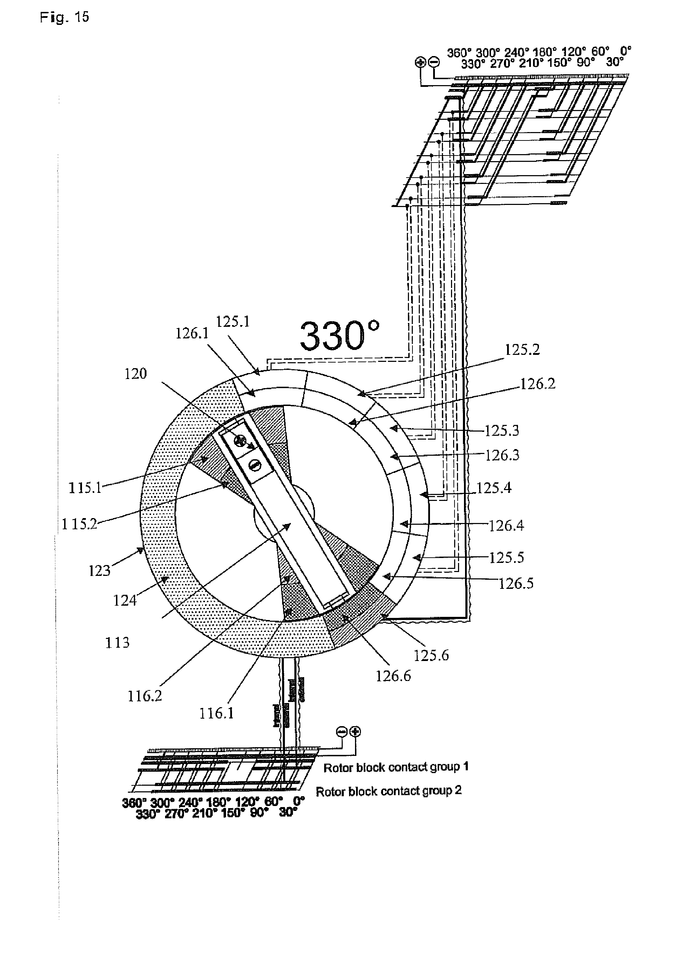

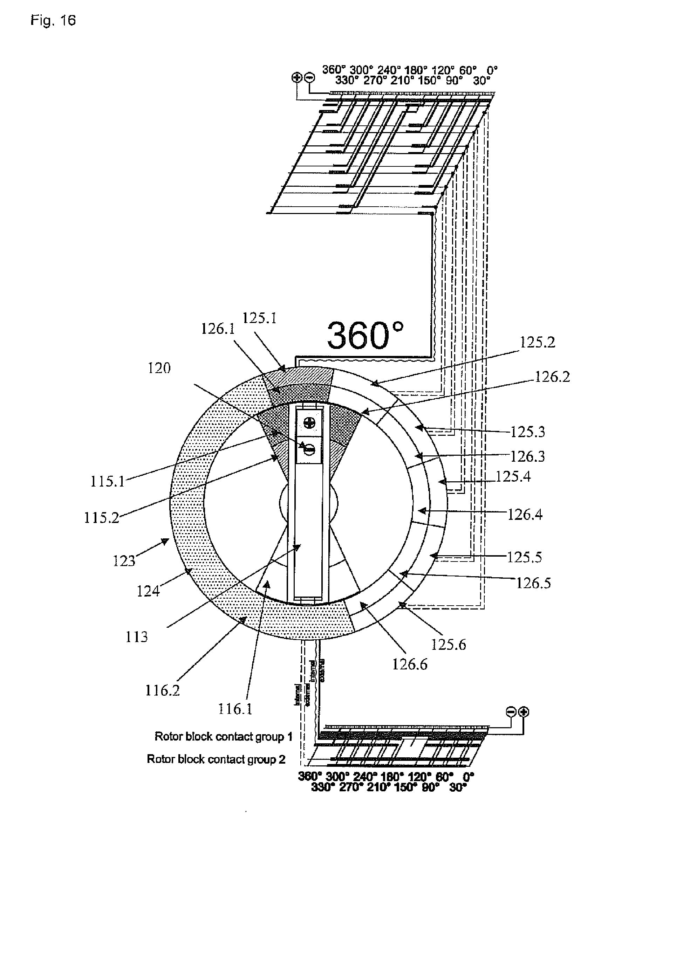

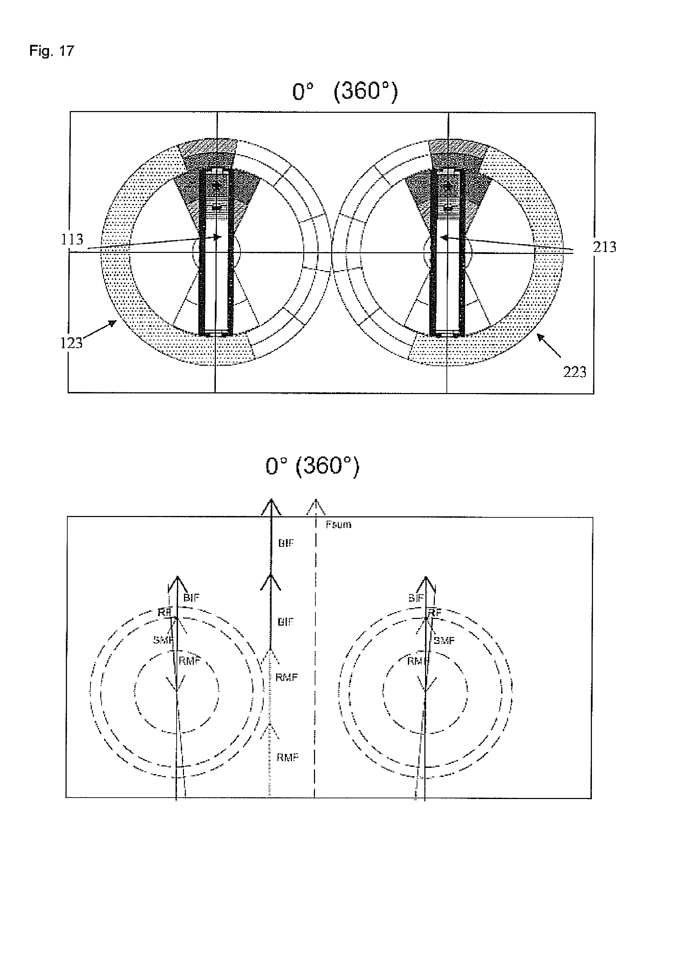

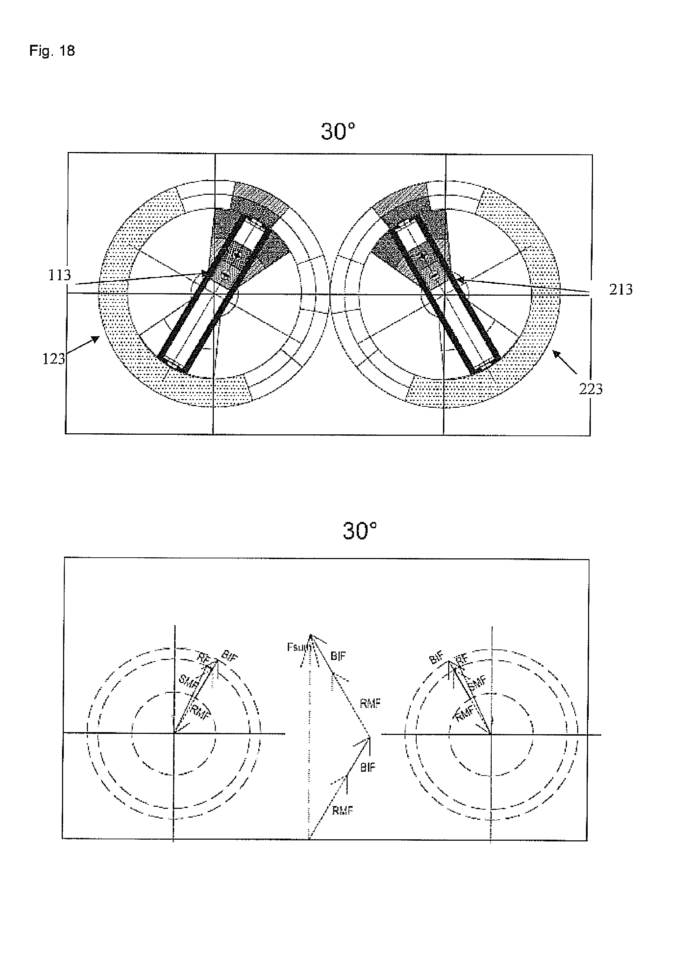

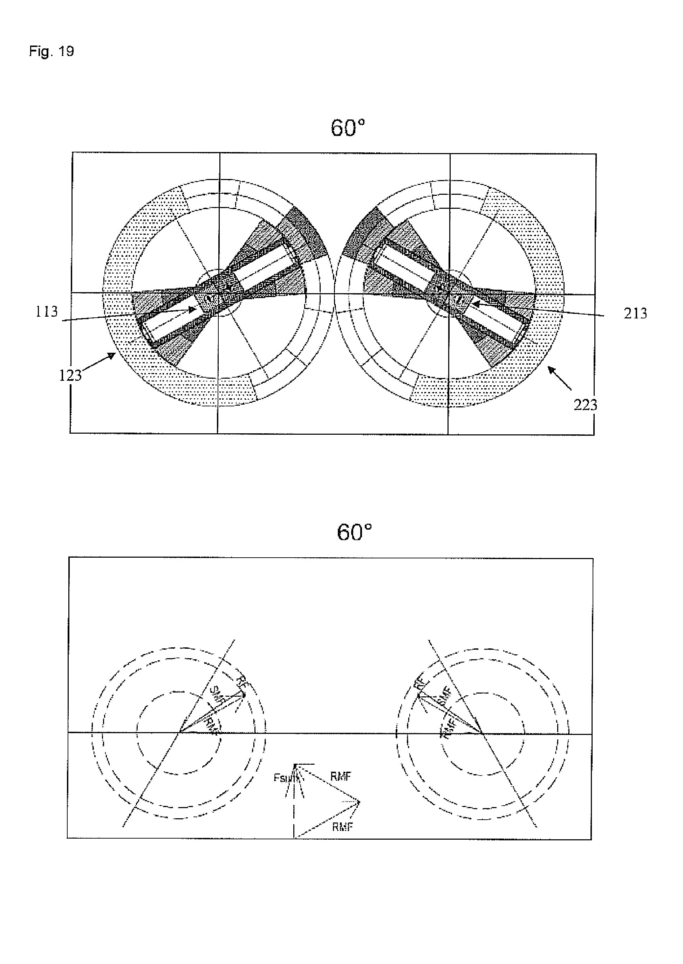

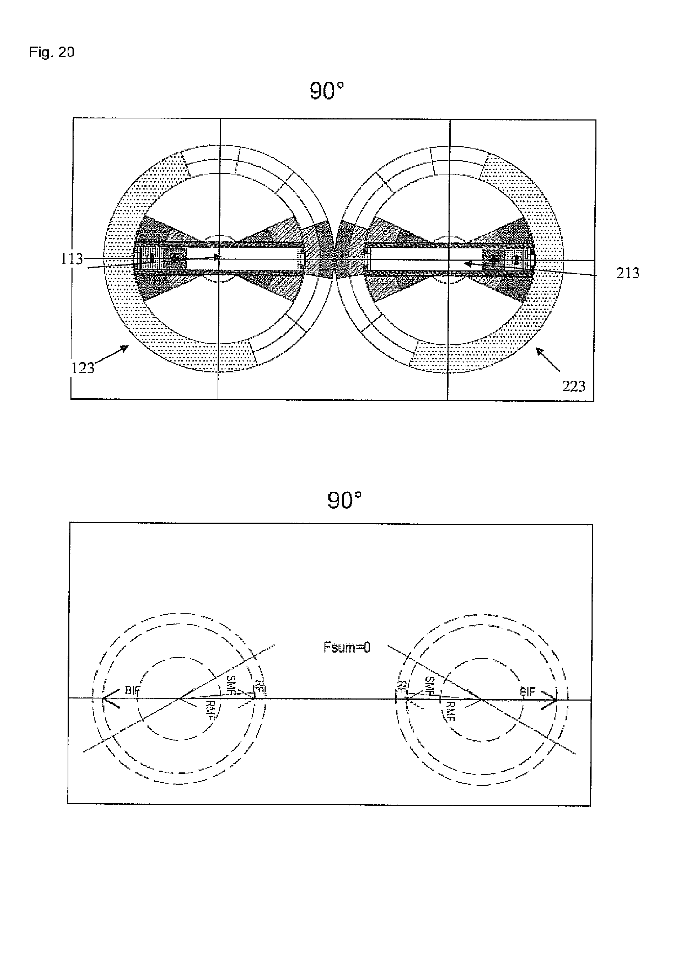

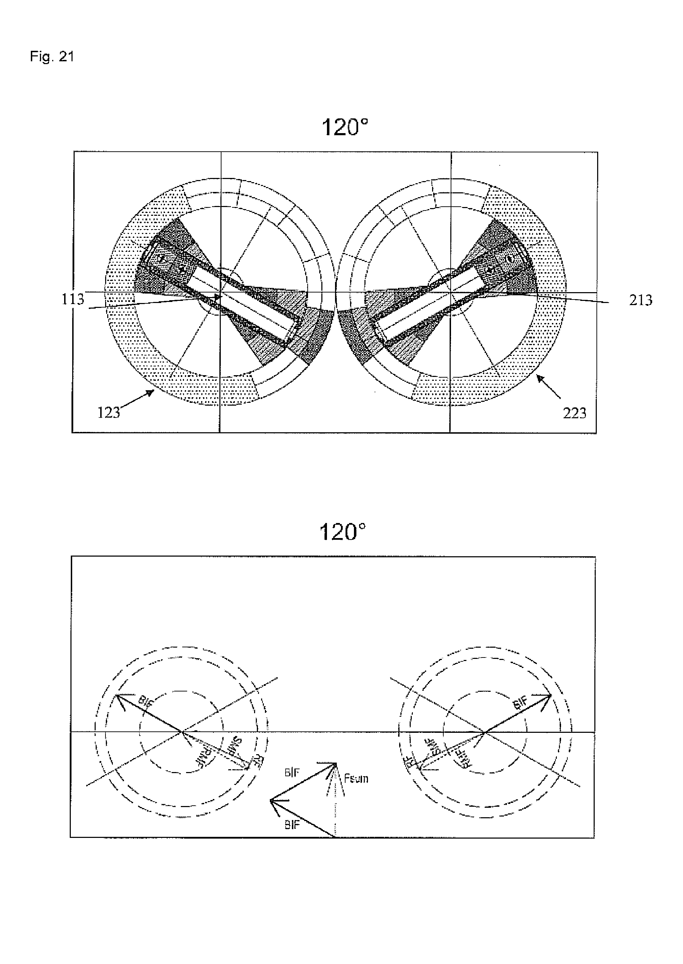

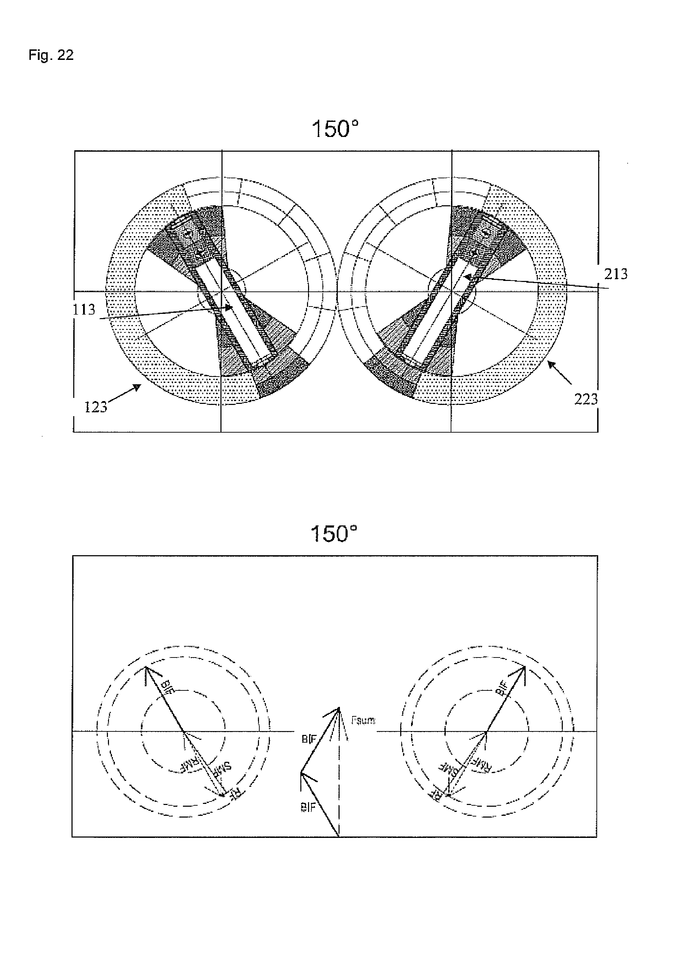

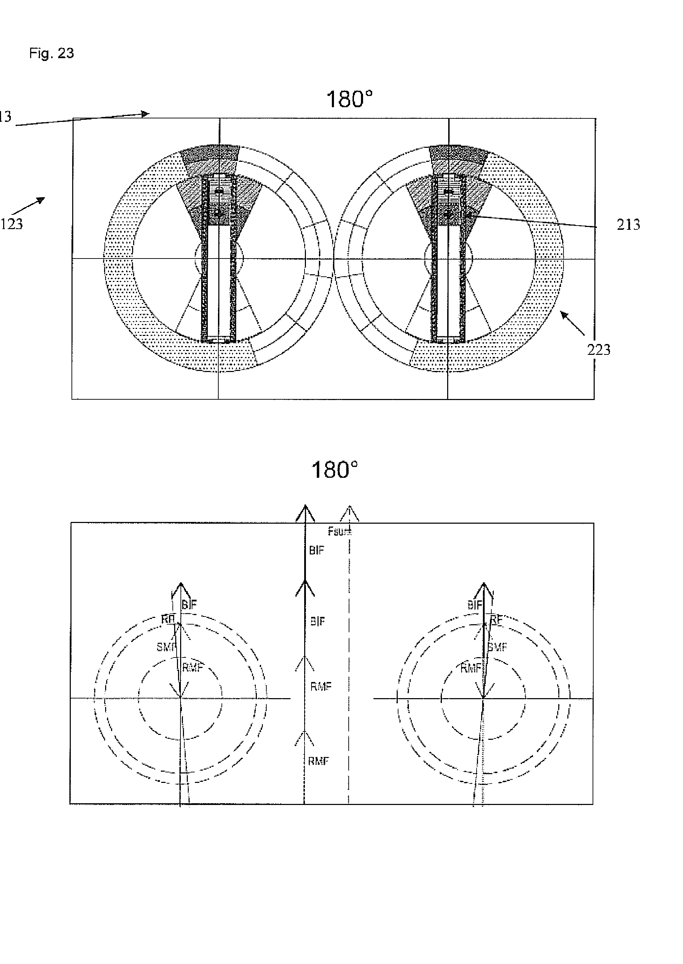

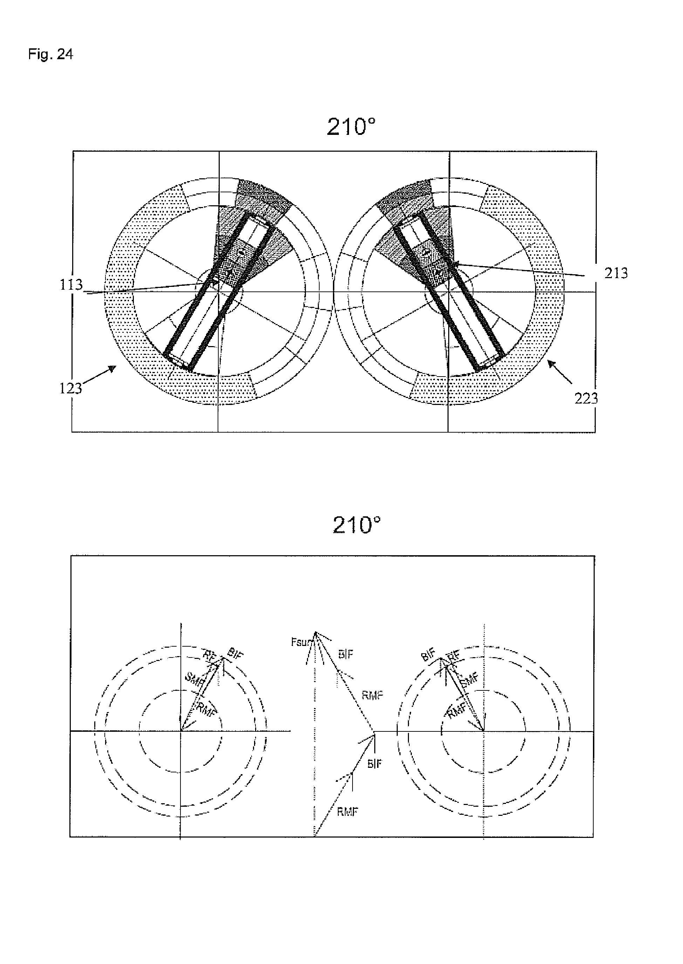

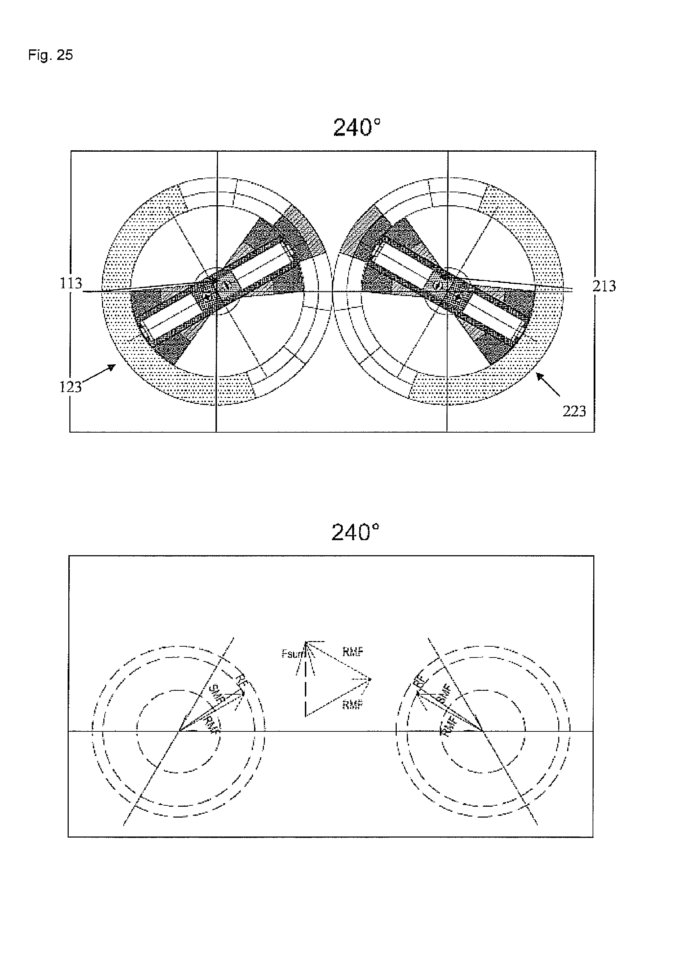

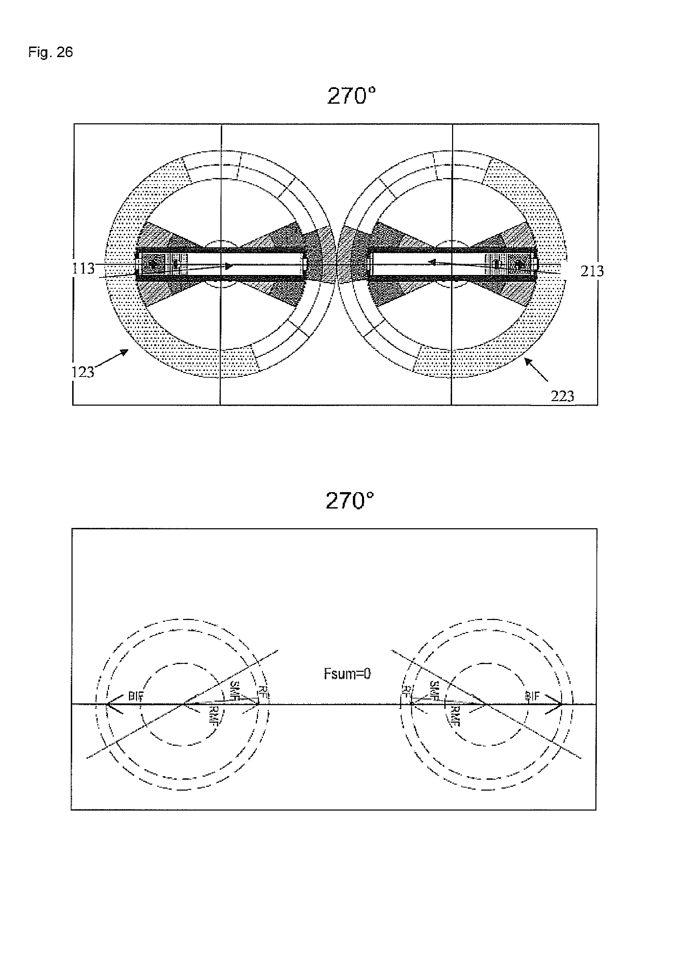

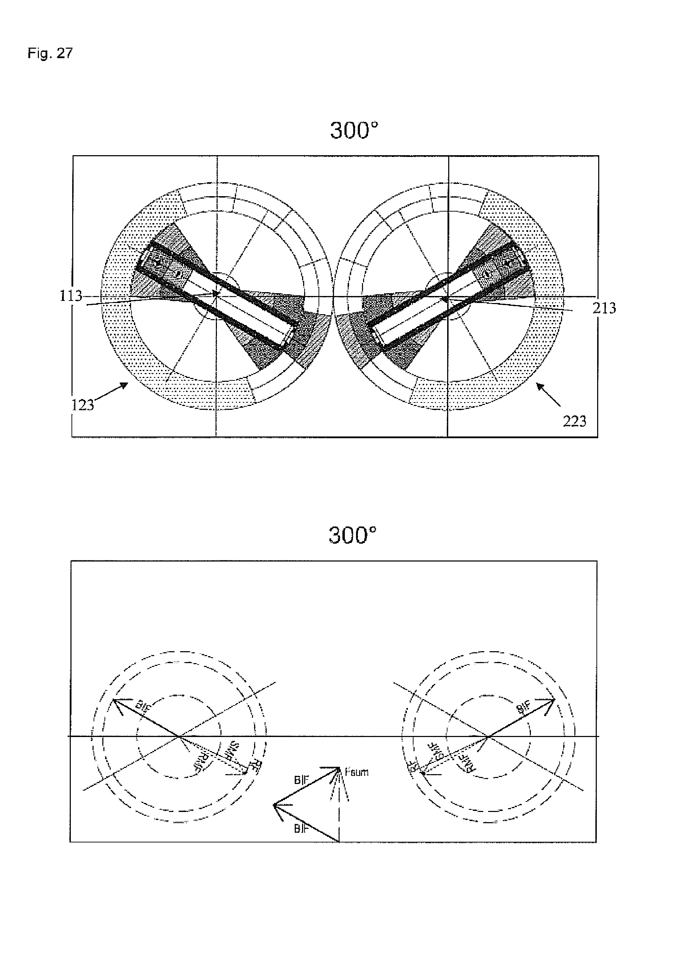

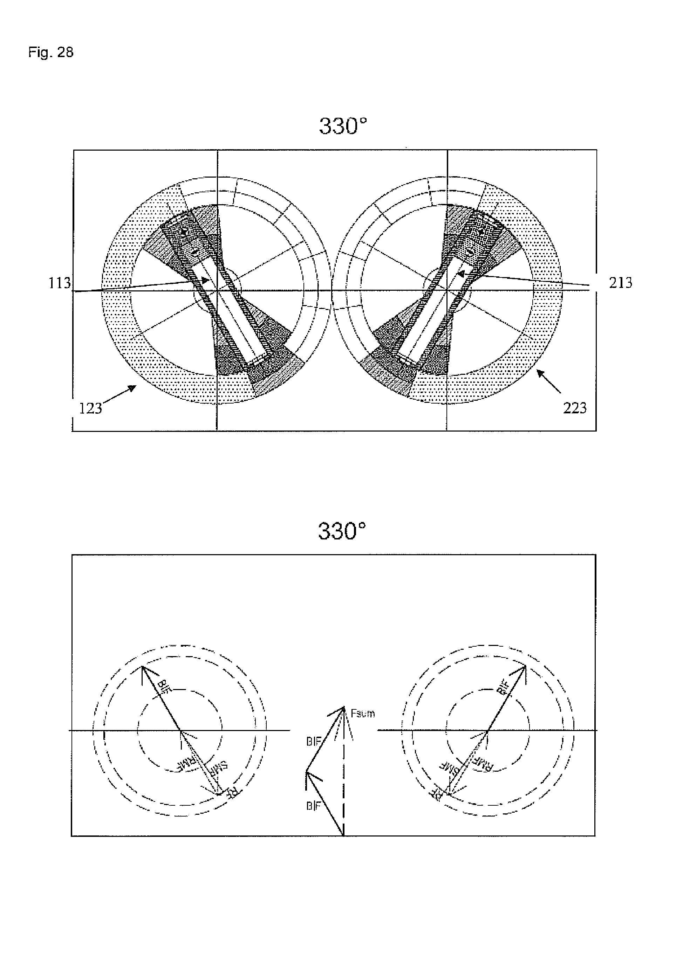

Fig. 3 shows a first embodiment of the invention of two coupled rotating magnetic objects 120, 220. Fig. 4 to 16 shows a schematic representation of a single rotating magnetic object 120 in a first rotor 113 placed in a first stator 123 at angles between 0° and 360° and the corresponding magnetization of the stator 123 and rotor 113 magnetic elements. Fig. 17 to 28 show a schematic representation of a full turn of the two rotors 113, 223 of Fig. 3 with two moving objects or permanent magnets 120, 220 inside, each of the two rotors 113, 213 being arranged in a first or second stator 123, 223, respectively.

The whole system consists of at least one cylinder 114 made of non-magnetic material, preferably aluminum, which is going through a shaft 119 that rotates around axis X. The cylinder 114 has two coils of electric magnets 115, 116 positioned on both sides of the respective cylinder 114 in relation to the shaft 119 and two blocking caps with shock absorbers on both edges. Inside the cylinder 114 is provided a permanent magnet 120 with a natural magnet field. Further provided is at least one stator 123 that has a number of magnets 125.1-6, 126-1-6, i.e. combined natural and electromagnets, arranged in such a manner, that the electrical supply to both cylindrical magnets 115, 116 and stator magnets 125, 126 would provide rotation of the system, and by means of creating corresponding magnet fields, the object or permanent magnet 120 would travel within the cylinder 114 while the cylinder 114 rotates around axis X.

In other words, the mechanism represents a constant electric current motor that has a cylinder 114 as its rotor 113, and a piston of a natural permanent magnet 120, that travels inside the cylinder 114, driven by the magnet field of the rotor 113 and/or stator 123. The operation of the magnets 115, 116, 125, 126 is arranged in such a manner that a rotation of the magnetic field of the stator 123 always pushes the magnetic field of the rotor 113 making the rotor 113 to rotate around axis X, and the magnetic field of one of the electric magnets 115, 116 of the rotor 113 would always oppose both the stator magnet field and the magnet field of the moving object or permanent magnet 120 at the same time.

In some moments of rotation, the magnetic field of the rotor helps the object 120 to travel within the cylinder 114, so it would change its location as required. As can be seen in the figures 4-28, the radius of rotation of the object or permanent magnet 120 is changing constantly.

The force needed to push the object or permanent magnet 120 through the cylinder 114 is generated by the opposition of the natural magnetic field of the permanent magnet 120 and the electric field of the electric magnet 115, 116 of the rotor 113. To push the permanent magnet 120 trough the cylinder 114 in a desired time which is not less then a quarter of a time of one complete 360° turn of the shaft 119, the magnetic force has to conquer the force of inertia of rotation of the object or permanent magnet, and mass inertia of the object.

$$F_{magn} = F_{rotation\ inertia} + F_{inertia}, \text{ where}$$

$$F_{inertia} = m \cdot 2L \cdot (kn)^2, \text{ and } F_{rotation\ inertia} = 4 \cdot \pi^2 \cdot m \cdot r \cdot f^2,$$

where f is the frequency of rotation of the object, $F_{inertia}$ is the force of inertia, $F_{rotation\ inertia}$ is the force of inertia of rotation, m is the mass of the object or permanent magnet, v is the speed of the object or permanent magnet perpendicular to the radius, r is the radius of rotation, L is the length of travel of the object or permanent magnet and K = 360°/$\alpha$, where $\alpha$ is an angle of rotation of the cylinder at which the object makes a complete longitudinal turn.

Fig. 3 shows a first embodiment of the present invention. Two rotating objects or first and second permanent magnets 120, 220 are provided in a first and second rotor 113, 213, respectively.

The first rotor 113 consists of a hollow cylinder 114 in which the first permanent magnet 120 is arranged to move. The hollow cylinder 114 has a main axis, in Fig. 3 being parallel to a vertical axis. On the upper and lower end of the cylinder 114 are provided upper and lower electromagnets 115, 116. Each upper and lower electromagnet 115, 116 consists of two magnetizable parts 115.1, 115.2 and 116.1, 116.2 placed on top of each other, respectively, to produce a magnetic field parallel to the main axis of the cylinder 114. Also, the first permanent magnet 120 produces preferably a magnetic field parallel to the main axis of the cylinder 114. The cylinder 114 with the electromagnets 115, 116 is placed into a hole of a shaft 119. First and second washers 117, 118 may be placed between the cylinder 114 and the electromagnets 115, 116. The first rotor 114 is arranged inside a first electromagnetic stator 123. The stator 123 is preferably of cylindrical form. The first rotor 113 is preferably arranged to extend along the diameter of the first stator 123. However, the first rotor 113 may also be arranged with an angle with respect to the diameter or cross section of the first stator 123. The stator has electromagnet elements arranged on its circumference. In the present example, a first half of the circumference of the first stator 123 consists of a non-variable stator element, the second half consists of a plurality of electromagnetic segments 125, 126, in the present embodiment without any limitation six segments 125.1-6, 126.1-6, wherein each segment consists of an inner and an outer electromagnetic element 125, 126. Each of the segments 125, 126 can be differently magnetized, preferably controlled by a control unit (not shown). The first shaft 119 is arranged perpendicular to the cross section of the first electromagnetic stator 123 fixed by a contact group 127.

The structural arrangement of the second rotor 213 and second stator 223 is identical to the structural arrangement of the first rotor 113 and the first stator 223. The second rotor 213 consists of a hollow cylinder 214 in which the second permanent magnet 220 is arranged to move. The hollow cylinder 214 has a main axis, in Fig. 3 being parallel to a vertical or z-axis. On the upper and lower end of the cylinder 214 are provided upper and lower electromagnets 215, 216. Each upper and lower electromagnet 215, 216 consists of two magnetizable parts 215.1, 215.2 and 216.1, 216.2 placed on top of each other, respectively, to produce a magnetic field parallel to the main axis of the cylinder 214. Also, the second permanent magnet 220 produces preferably a magnetic field parallel to the main axis of the cylinder 214. The cylinder 214 with the electromagnets 215, 216 is placed into a hole of a shaft 219. First and second washers 217, 218 are placed between the cylinder 214 and the electromagnets 215, 216. The second rotor 214 is arranged inside a second electromagnetic stator 223. The second stator 223 is preferably of cylindrical form. The second rotor 213 is preferably arranged to extend along the diameter of the second stator 223. However, the second rotor 213 may also be arranged with an angle with respect to the diameter or cross section of the second stator 223. The second stator 223 has electromagnet elements arranged on its circumference. In the present example, a first half of the circumference of the first stator 223 consists of a non-variable stator element, the second half consists of a plurality of electromagnetic segments 225, 226, in the present embodiment without any limitation six segments 225.1-6, 226.1-6, wherein each segment consists of an inner and an outer electromagnetic element 225, 226. Each of the segments 225, 226 can be differently magnetized, preferably controlled by a control unit (not shown). The first shaft 219 is arranged perpendicular to the cross section of the first electromagnetic stator 223 fixed by a contact group 227.

The first and second stators 123, 223 with first and second rotors 113, 213 are placed into a base capable of housing the stators and rotors.

Fig. 4 to 16 show cut-throughs of a first stator 123 with a first rotor 113 and a first permanent magnet 120 inside the first rotor 113 at different angles of the rotor 113 with respect to the stator 123, i.e. at angles 0°, 30°, 60°, 90°, 120°, 150°, 180°, 210°, 240°, 270°, 300°, 330°, 360°. Also, the different magnetizations of the electromagnetic elements of the first stator 123 and rotor 113 are shown. The distribution of the magnetization over time produces a clockwise movement of the rotor 113. In order to initiate the movement, the magnetic field of the stator 123 is not aligned with the magnetic field of the rotor 113 and the permanent magnet 120 inside the rotor 113. In Fig. 4, the first electromagnetic segment 125.1, 126.1 of the stator 123 covers an angle of-20° to +10° with respect to the first rotor 113. The other five variable electromagnetic segments 125.2-6, 126.2-6 are distributed correspondingly. Table 1 shows the distribution of magnetization (+ or -) over a full circle of movement.

The distribution of the magnetization of the second stator 223 and the second rotor 213 correspond to that of table 1, with the difference that an anti-clockwise rotation is achieved. For details please refer to Fig. 17-28, which show on the upper part a cut-through through both first and second stators 123, 223 and a vector diagram of the forces of the system.

Table 1: The distribution of the magnetic fields in Fig. 4 to 16;

|  | 0° | 30° | 60° | 90° | 120° | 150° | 180° | 210° | 240° | 270° | 300° | 330° | 360° |
|---|---|---|---|---|---|---|---|---|---|---|---|---|---|
| 125.1 | - |  |  |  |  |  | + |  |  |  |  |  | - |
| 126.1 | + |  |  |  |  |  | - |  |  |  |  |  | + |
| 125.2 |  | - |  |  |  |  |  | + |  |  |  |  |  |
| 126.2 |  | + |  |  |  |  |  | - |  |  |  |  |  |
| 125.3 |  |  | + |  |  |  |  |  | - |  |  |  |  |
| 126.3 |  |  | - |  |  |  |  |  | + |  |  |  |  |
| 125.4 |  |  |  | + |  |  |  |  |  | - |  |  |  |
| 126.4 |  |  |  | - |  |  |  |  |  | + |  |  |  |
| 125.5 |  |  |  |  | + |  |  |  |  |  | - |  |  |
| 126.5 |  |  |  |  | - |  |  |  |  |  | + |  |  |
| 125.6 |  |  |  |  |  | + |  |  |  |  |  | - |  |
| 126.6 |  |  |  |  |  | - |  |  |  |  |  | + |  |
| 115.1 | + | + | - | - | - | - |  |  | + | - | - | - | + |
| 115.2 | - | - | + | + | + | + |  |  | - | + | + | + | - |
| 116.1 |  |  | - | + | + | + | - | - | + | + | + | + |  |

(continued)

|  | 0° | 30° | 60° | 90° | 120° | 150° | 180° | 210° | 240° | 270° | 300° | 330° | 360° |
|---|---|---|---|---|---|---|---|---|---|---|---|---|---|
| 116.2 |  |  | + | - | - | - | + | + | - | - | - | - |  |

As can be seen from the figures 17 to 28, at any given moment the object 120, 220 inhibits a different position in relation to axis X, and there are two forces involved along its journey, the force of inertia of rotation, and the force of the magnet field, that in most of the cycles is pushing the permanent magnet , and in a few cycles is pulling the permanent magnet.

At the angles 60°-90° and 240°-270° the magnet force of the rotor magnet 115 on one side of the shaft 119 helps to pull the permanent magnet 120, and on the side of the shaft 119 the other rotor magnet 116 pushes the permanent magnet 120 into the maximum radial position, at those moments the whole mechanism does not have any vertical forces, i.e. along the axis Z.

At angles 90°-180° and 270°-360°, the magnetic force of the rotor 113, 213 is holding the object 120, 220 in its maximum radial position, and the force of inertia of rotation of the object 120, 220 is acting upon the mechanism, having always a positive value and a direction in the projection on the Z-axis.

At angles of 0°-90° and 180°-270°, the magnet field of the rotor magnets 115, 116, 215, 216 and the magnet field of the stators 123, 223 acting on the magnet field of the permanent magnets 120, 220, the magnetic force pushes the permanent magnet 120, 220 conquering the force of inertia of the permanent magnet 120, 220 and the force of the mass inertia of the permanent magnet 120, 220, thus creating a resulting force, which acts on the whole system.

In the Figures 17 to 28, the following forces are shown:

SMF - stator magnet force

RMF - rotor magnet force

RF - rotating force

BIF - balance force of inertia of rotation

$F_{sum}$ - sum force (sum of all forces)

By coupling two single systems or more into one mechanism, where one single system exhibits clockwise rotation, and the other one exhibits anticlockwise rotation, and where the frequency of the rotation and the cycles of the rotation and the plane of the rotation are similar or identical, the resulting force has a vertical component only, i.e. parallel to a Z-axis, and by means of varying the magnet field by increasing the voltage or current, an increase of the frequency of rotation an increase of the magnet force can be achieved, resulting in an increase of the force of inertia and an increase of the resulting force. The force of inertia and the resulting force can move the whole mechanism, or influence its weight or the mechanism will experience deformation. Thus, the system can be used to move an object in three-dimensional space or can be used as a vibrator.

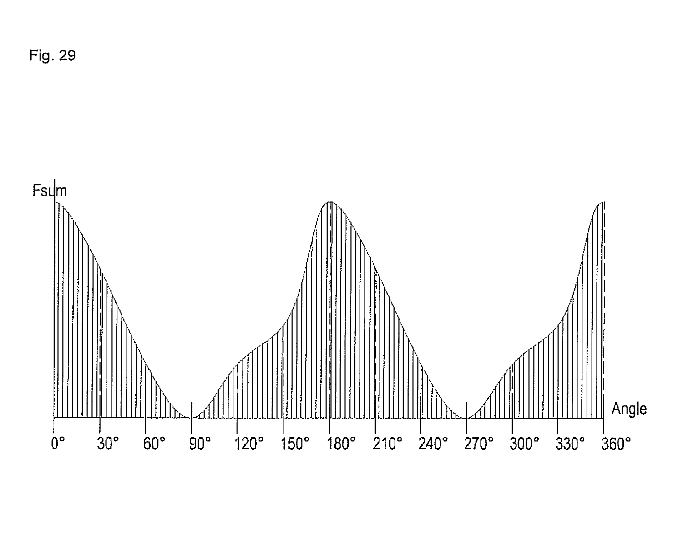

Fig. 29 shows the size of the resulting force over the whole cycle of movement. The resulting force has its maximum at 0°, 180° and 360° and a minimum at 90° and 270°. The resulting force distribution is not sinusoidal since the resulting force depends on the radius of the rotating object or permanent magnet, which changes constantly.

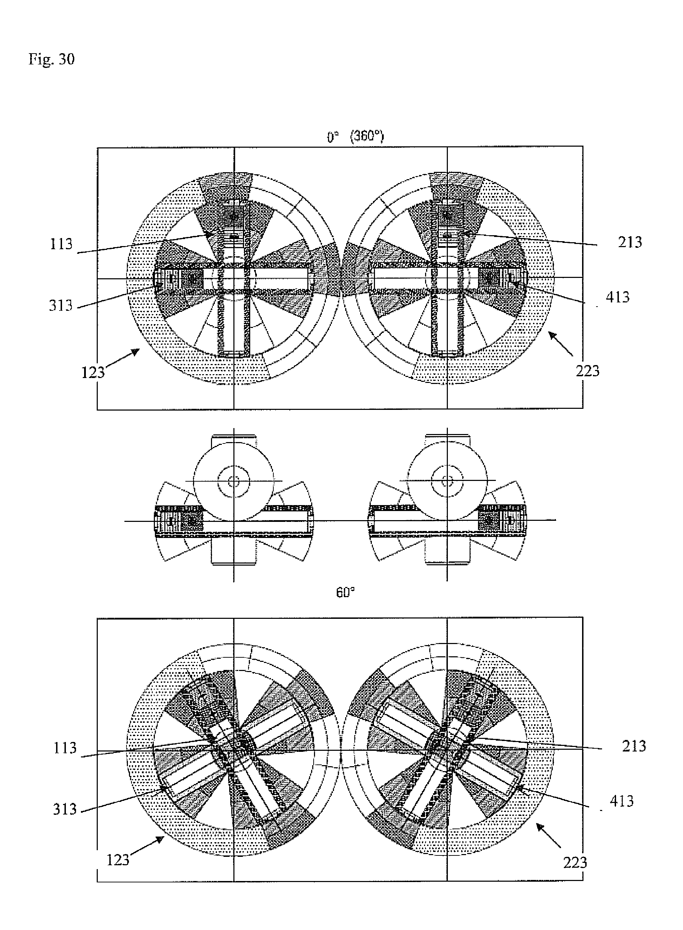

Further, one may create multiple cylinder or rotor systems. For instance, a multitude of rotors may go through the same shaft where they may have different angles with respect to the Z-axis (90° or 60° or less), wherein the rotors are arranged in different planes with respect to each other. Fig. 30 shows a corresponding second embodiment of the invention. Here, two rotors 113, 313 and 213, 413 with first to fourth permanent magnets 120, 220, 320, 420 are arranged inside the first and second electromagnetic stator 123, 223, respectively. The two rotors 113, 313, 213, 413 in each stator 123, 223 preferably go through the same shaft 119, 219 but are arranged in different planes inside the respective first and second stator 123, 223. Fig. 30 shows the rotors and stators at 0° and 60° rotation.

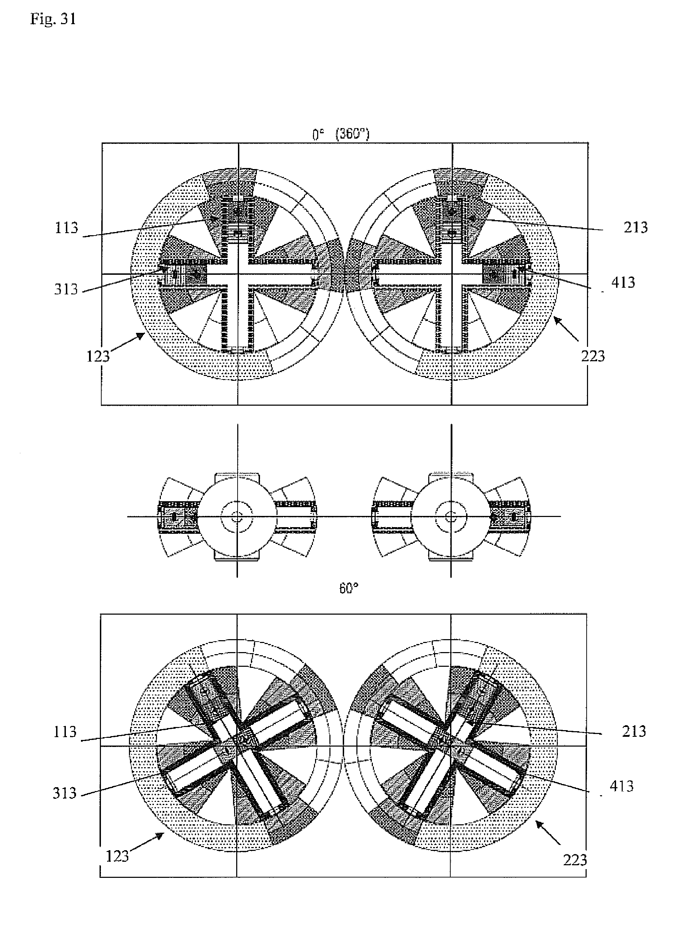

Fig. 31 shows an alternative third embodiment of the invention. Like in the second embodiment, two rotors 113, 313 and 213, 413 with first to fourth permanent magnets 120, 220, 320, 420 are arranged inside the first and second electromagnetic stator 123, 223, respectively. However, they are arranged in the same plane such that the two cylinders form a cross. The movement of the first and third or second and fourth permanent magnets 120, 320, 220, 420 is then offset in order to avoid collision of the permanent magnets. Fig. 31 shows the rotors and stators at 0° and 60° rotation.

A multi cylinder system allows achieving an even distribution of the force of inertia and resulting force depending on the angle of rotation of the rotors with respect to each other.

It is pointed out that the above embodiments have been described while referring to specific alignments of frequencies of rotation, phases and axis of rotation. This has been done for simplification only. With the above-presented arrangement, the resulting force can be aligned with the Z-axis.

However, it is important to notice that the masses of the permanent magnets can be different and varied, the radii of the stators can be different and varied, the frequencies of rotation of the rotors can be different and varied by varying for instance the voltage or current of the electromagnets, all directions of the rotational axis of the rotors and the electromagnetic fields can be non-parallel and can be varied.

Changing the mutual angles between the axis of rotations of all the objects and electromagnetic fields, the skilled person will vary the direction of the resulting force, and by means of changing the mass of the objects, radiuses of rotation or by changing the frequency of rotation, the skilled person can achieve any needed value of the resulting force and the projection of the sum force on the axis of the expected direction.

That means, in general the inventive method of producing a residual force in a system of rotating objects generates a desired net residual force by adjusting at least one element of the group consisting of: the frequency of rotation of the rotors, the frequency of movement of the permanent magnets, the direction of the axis of rotations of the rotors with respect to the stators, the weight of the permanent magnets, the phases of rotation of the permanent magnets, the radii of rotation of the permanent magnets.

The net residual force is maximized if all frequencies of rotation are the same, and the axis of rotations are parallel to each other and, and the permanent magnets and their weights are identical, and the phase differences between the permanent magnets are zero, preferably all phases of rotation are the same, and the locations of the zero-crossing points of motion are identical for all rotors and their planes of rotation, and the radii of rotation of the permanent magnets are identical.

It is pointed out that the actuator of the present invention can of course also be used as a vibrator by misaligning the rotors, masses, and radii of rotation or axis of rotation.

**List of reference signs**

| | |
|---|---|
| 6 | rotating object |
| 100 | base |
| 112 | bearing |
| 113 | first rotor |
| 114 | cylinder of first rotor |
| 115 | upper electromagnet of first rotor |
| 115.1 | first part of upper electromagnet of first rotor |
| 115.2 | second part of upper electromagnet of first rotor |
| 116 | lower electromagnet of first rotor |
| 116.1 | first part of upper electromagnet of first rotor |
| 116.2 | second part of electromagnet magnet of first rotor |
| 117 | first washer of first rotor |
| 118 | second washer of first rotor |
| 119 | shaft of first rotor |
| 120 | first permanent magnet |

| 121 | N-side of first permanent magnet |
|---|---|
| 122 | S-side of first permanent magnet |
| 123 | first electromagnetic stator |
| 124 | electric magnet of first electromagnetic stator of a first part |
| 125.1-6 | outer electric magnets of first electromagnetic stator of a second part |
| 126.1-6 | inner electric magnets of first electromagnetic stator of the second part |
| 127 | contact group |
| 212 | bearing |
| 213 | second rotor |
| 214 | cylinder of second rotor |
| 215 | upper electromagnet of second rotor |
| 215.1 | first part of upper electromagnet of second rotor |
| 215.2 | second part of upper electromagnet of second rotor |
| 216 | lower electromagnet of second rotor |
| 216.1 | first part of upper electromagnet of second rotor |
| 216.2 | second part of upper permanent magnet of second rotor |
| 217 | first washer of second rotor |
| 218 | second washer of second rotor |
| 219 | shaft of second rotor |
| 220 | second permanent magnet |
| 221 | N-side of second permanent magnet |
| 222 | S-side of second permanent magnet |
| 223 | second electromagnetic stator |
| 224 | electric magnet of second electromagnetic stator of a first part |
| 225.1-6 | inner electric magnets of second electromagnetic stator of a second part |
| 226.1-6 | outer electric magnets of second electromagnetic stator of the second part |
| 227 | contact group |
| 313 | third rotor |
| 315 | upper electromagnet of third rotor |

| 316 | lower electromagnet of third rotor |
| 320 | third permanent magnet |
| 413 | fourth rotor |
| 415 | upper electromagnet of fourth rotor |
| 418 | upper electromagnet of fourth rotor |
| 420 | fourth permanent magnet |

**Claims**

1. An actuator, comprising:

   a first electromagnetic stator (123),
   a first rotor (113) being rotatably arranged inside the first electromagnetic stator (123),
   a first and a second electromagnet (115, 116) being provided at a first and an opposing second end of the first rotor (113), respectively,
   a first permanent magnet (120) coupled to the first rotor (123) such that the first permanent magnet (120) is capable of moving along the first rotor (123),
   a second electromagnetic stator (223),
   a second rotor (213) being rotatably arranged inside the second electromagnetic stator (223),
   a third and a fourth electromagnet (215, 216) being provided at a first and an opposing second end of the second rotor (213), respectively,
   a second permanent magnet (220) coupled to the second rotor (213) such that the second permanent magnet (220) is capable of moving along the second rotor (213),

   wherein the distribution of magnetic-fields inside the first electromagnetic stator (123) is provided such that the first rotor (113) rotates clockwise and the distribution of magnetic-fields in the second electromagnetic stator (223) is provided such that the second rotor (213) rotates anti-clockwise, and
   wherein the distribution of magnetic-fields of the first to fourth electromagnets (115, 116; 215, 216) of the first and second rotors (113, 213) is provided such that their magnetic forces force the first and second permanent magnets (120, 220) to move along the first and second rotors (113, 213), respectively.

2. Actuator of claim 1, wherein the first to fourth electromagnets (115, 116; 215, 216) of the rotors (113, 213) are provided with variable magnetic fields such that their magnetic forces oppose the projection of the magnetic forces of the first and second permanent magnets (120, 220) onto the main axis of the respective rotor (113, 213) and the projection of the magnetic forces of the stator (123, 223) onto the main axis of the respective rotor (113, 213).

3. Actuator of claim 1 or 2, wherein the magnetic field generated by the first stator (123) rotates clockwise and the magnetic field generated by the second stator (223) rotates anti-clockwise.

4. Actuator of any of the previous claims, wherein the magnetic-field of the first permanent magnet (120) is arranged in parallel to a main axis of the first rotor (113), and wherein the magnetic-field of the second permanent magnet (220) is arranged in parallel to a main axis of the second rotor (213).

5. Actuator of any of the previous claims, wherein half of the circumference of each of the first and second electromagnetic stators (123, 223) comprise magnetizable elements, the other half being non-variable such that the magnetic field generated by each of the first and second electromagnetic stators (123, 223) is not-aligned with the magnetic-field of the first and to fourth electromagnets (115, 116; 215, 216), respectively.

6. Actuator of any of the previous claims, wherein the first rotor (113) and the second rotor (213) rotate in the same plane and/or wherein the first and second rotor (113, 213) rotate with the same frequency.

7. Actuator of any of the previous claims, wherein the center points of the first and second electromagnetic stators (123, 223) are arranged spaced apart from each other on an axis perpendicular to the planes of rotation of the first and second rotors (113, 213).

8.  Actuator of any of the previous claims, wherein the first and second electromagnetic stators (123, 223) are formed as cylinders and the first and second rotors (113, 213) are arranged along the diameter of the first and second electromagnetic stators (123, 223), respectively, or are arranged with an angular offset with respect to the cross section of the first and second electromagnetic stators (123, 223).

9.  Actuator of any of the previous claims, wherein the first and second rotors (113, 213) are formed as hollow cylinders, the first and second permanent magnets (120, 220) being arranged inside the hollow cylinders.

10. Actuator of any of the previous claims, wherein the first and second permanent magnets (120, 220) are identical and wherein the first and second electromagnetic stators (123, 223) are identical.

11. Actuator of any of the previous claims, wherein the phase of rotation the first rotor (113) and the phase of rotation of the second rotor (213) is the same.

12. Actuator of any of the previous claims, further comprising:

    a third rotor (313) arranged inside the first electromagnetic stator (123) having a fifth and sixth electromagnet (315, 316) formed at both ends of the third rotor (313), a third permanent magnet (320) being coupled to the third rotor (313), and
    a fourth rotor (413) arranged inside the second electromagnetic stator (223) having a seventh and eighth electromagnet (415, 416) formed at both ends of the fourth rotor (413), a fourth permanent magnet (420) being coupled to the third rotor (413).

13. Actuator of claim 12, wherein the third rotor (313) and the first rotor (113) are provided perpendicular to each other and the fourth rotor (413) and the second rotor (213) are provided perpendicular to each other.

14. Actuator of claim 12 or 13, wherein
    the third rotor (313) is arranged in a different plane than the first rotor (113) and the fourth rotor (413) is arranged in a different plane than the second rotor (213), or
    the third rotor (313) is arranged in the same plane as the first rotor (113) and the fourth rotor (413) is arranged in the same plane as the second rotor (213).

15. Actuator of any of the previous claims, wherein the actuator comprises a control unit to control the distribution of magnetic fields of the electromagnetic stators (123, 223) and the electromagnets attached to the rotors (113, 213, 313, 413).

Fig. 1

Fig. 2a

Fig. 2b

Fig. 2c

Fig. 2d

Fig. 3

Fig. 4

360° 300° 240° 180° 120° 60° 0°
330° 270° 210° 150° 90° 30°

126.1 125.1

120

0°

125.2
126.2
125.3
126.3
125.4
126.4
125.5
126.5

115.1
115.2
123
124
113
116.1
116.2

125.6
126.6

Rotor block contact group 1
Rotor block contact group 2

360° 300° 240° 180° 120° 60° 0°
330° 270° 210° 150° 90° 30°

Fig. 5

360° 300° 240° 180° 120° 60° 0°
330° 270° 210° 150° 90° 30°

30°

126.1 125.1

120

125.2
126.2

115.1
125.3
126.3

115.2
125.4

123
126.4

124
125.5

113
126.5

116.1
125.6

116.2
126.6

Rotor block contact group 1
Rotor block contact group 2

360° 300° 240° 180° 120° 60° 0°
330° 270° 210° 150° 90° 30°

Fig. 6

EP 2 341 602 A1

Fig. 7

360° 300° 240° 180° 120° 60° 0°
330° 270° 210° 150° 90° 30°

90°

126.1  125.1

120

125.2

126.2

125.3

126.3

115.1

125.4

115.2

126.4

123

124

125.5

126.5

113

116.1

116.2

125.6

126.6

Rotor block contact group 1

Rotor block contact group 2

360° 300° 240° 180° 120° 60° 0°
330° 270° 210° 150° 90° 30°

20

Fig. 8

360° 300° 240° 180° 120° 60° 0°
330° 270° 210° 150° 90° 30°

120°

126.1 125.1

120

125.2

126.2

125.3

126.3

115.1

125.4

115.2

126.4

123

124

125.5

113

126.5

116.1

116.2

125.6

126.6

Rotor block contact group 1
Rotor block contact group 2

360° 300° 240° 180° 120° 60° 0°
330° 270° 210° 150° 90° 30°

21

Fig. 9

Rotor block contact group 1

Rotor block contact group 2

Fig. 10

360° 300° 240° 180° 120° 60° 0°
330° 270° 210° 150° 90° 30°
⊕⊖

126.1  125.1
120
**180°**

125.2
126.2
125.3
126.3
125.4
126.4
125.5
126.5

115.1
115.2
123
124
113
116.1
116.2

125.6
126.6

Rotor block contact group 1
Rotor block contact group 2

360° 300° 240° 180° 120° 60° 0°
330° 270° 210° 150° 90° 30°

⊖⊕

23

Fig. 11

Fig. 12

Rotor block contact group 1
Rotor block contact group 2

Fig. 13

360° 300° 240° 180° 120° 60° 0°
330° 270° 210° 150° 90° 30°

126.1  125.1

**270°**

120

125.2

126.2

125.3

115.1

126.3

115.2

125.4

123

126.4

124

125.5

113

126.5

116.1

125.6

116.2

126.6

Rotor block contact group 1
Rotor block contact group 2

360° 300° 240° 180° 120° 60° 0°
330° 270° 210° 150° 90° 30°

Fig. 14

360° 300° 240° 180° 120° 60° 0
330° 270° 210° 150° 90° 30°

126.1 125.1

120

300°

125.2

126.2

115.1

125.3

126.3

115.2

125.4

123

126.4

124

125.5

113

126.5

116.2 116.1

125.6

126.6

Rotor block contact group **1**
Rotor block contact group 2

360° 300° 240° 180° 120° 60° 0°
330° 270° 210° 150° 90° 30°

Fig. 15

360° 300° 240° 180° 120° 60° 0°
330° 270° 210° 150° 90° 30°

126.1 125.1

120

330°

125.2
126.2

125.3
126.3

125.4

115.1

115.2

123

124

126.4

125.5

126.5

113

125.6

126.6

116.2

116.1

Rotor block contact group 1

Rotor block contact group 2

360° 300° 240° 180° 120° 60° 0°
330° 270° 210° 150° 90° 30°

Fig. 16

360° 300° 240° 180° 120° 60° 0°
330° 270° 210° 150° 90° 30°

125.1
126.1
120
125.2
126.2
125.3
126.3
125.4
115.1
115.2
126.4
123
124
125.5
126.5
113
125.6
116.2
126.6
116.1

Rotor block contact group 1
Rotor block contact group 2

360° 300° 240° 180° 120° 60° 0°
330° 270° 210° 150° 90° 30°

Fig. 17

## 0°  (360°)

113

123

213

223

## 0° (360°)

Fsum

BIF

BIF

BIF

RF

SMF

RMF

RMF

RMF

Fig. 18

30°

113

213

123

223

30°

Fig. 19

60°

60°

Fig. 20

90°

90°

Fig. 21

120°

113    213

123    223

120°

Fig. 22

150°

150°

Fig. 23

180°

213

223

180°

Fig. 24

210°

210°

Fig. 25

240°

240°

Fig. 26

270°

270°

Fig. 27

300°

113

123

213

223

300°

Fig. 28

330°

330°

Fig. 29

Fig. 30

0° (360°)

113

313

123

213

413

223

60°

113

313

123

213

413

223

Fig. 31

0° (360°)

113

213

313

413

123

223

60°

113

213

313

413

123

223

EP 2 341 602 A1

Europäisches
Patentamt
European
Patent Office
Office européen
des brevets

# EUROPEAN SEARCH REPORT

Application Number

EP 09 18 0963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 782 134 A (BOODEN JAMES D [US]) 21 July 1998 (1998-07-21) * column 2, line 20 - column 3, line 41; figures 1-3 * | 1-15 | INV. H02K57/00 F03G3/08 |
| Y | EP 0 766 271 A1 (OGINO SANSHIRO [JP]; ASAOKA KEIICHIRO [JP]) 2 April 1997 (1997-04-02) * column 15, lines 3-47; figure 8 * | 1-8,10, 11 | |
| Y | US 7 245 042 B1 (SIMNACHER LARRY W [US]) 17 July 2007 (2007-07-17) * sentence 47, paragraph 5 - sentence 11, paragraph 6; figures 2,3 * | 9 | |
| Y | DE 44 11 259 A1 (KRUK ROLAND [DE]) 13 October 1994 (1994-10-13) * column 1, lines 24-57; figure 2 * | 12,13 | |
| Y | EP 1 213 477 A1 (EKHIN JURY BRONISLAVOVICH [DE] EKHIN JURY BRONISLAVOVICH [RU]) 12 June 2002 (2002-06-12) * paragraph [0127]; figure 16 * | 14 | TECHNICAL FIELDS SEARCHED (IPC) H02K F03G |
| Y | GB 1 547 762 A (WHITTAKER R) 27 June 1979 (1979-06-27) * page 2, line 49 - page 3, line 24; figures 1-6 * | 15 | |

The present search report has been drawn up for all claims

| Place of search | Date of completion of the search | Examiner |
|---|---|---|
| Munich | 19 November 2010 | Kugler, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 18 0963

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2010

| Patent document cited in search report | | Publication date | Patent family member(s) | | Publication date |
|---|---|---|---|---|---|
| US 5782134 | A | 21-07-1998 | NONE | | |
| EP 0766271 | A1 | 02-04-1997 | US | 5886442 A | 23-03-1999 |
| US 7245042 | B1 | 17-07-2007 | NONE | | |
| DE 4411259 | A1 | 13-10-1994 | NONE | | |
| EP 1213477 | A1 | 12-06-2002 | AU | 3195897 A | 05-01-1998 |
| | | | WO | 9745639 A1 | 04-12-1997 |
| GB 1547762 | A | 27-06-1979 | NONE | | |

EPO FORM P0459

For more details about this annex : see Official Journal of the European Patent Office, No. 12/82